# EUROPEAN PATENT APPLICATION

(11) **EP 4 518 494 A1**
(43) Date of publication of application: **05.03.2025**
(21) Application number: 23795584.4
(22) Date of filing: 27.04.2023
(51) Int. Cl.: H04W 72/04, H04B 7/06

(54) **BEAM DETERMINATION METHOD AND APPARATUS, AND READABLE STORAGE MEDIUM**

(30) Priority: 28.04.2022 CN 202210461701; 01.08.2022 CN 202210920197; 12.08.2022 CN 202210970334; 28.11.2022 CN 202211502246
(71) Applicant: Datang Mobile Communications Equipment Co., Ltd., Beijing 100085 (CN)
(72) Inventor: LUO, Yajuan, Beijing 100085 (CN); LI, Hui, Beijing 100085 (CN); GAO, Qiubin, Beijing 100085 (CN); HUANG, Qiuping, Beijing 100085 (CN)
(74) Representative: Studio Torta S.p.A.
(86) International application number: PCT/CN2023/091378
(87) International publication number: WO 2023/208152

(57) **Abstract**

The present disclosure provides a beam determining method, an apparatus, and a readable storage medium, where the method includes: for a target signal or a target channel, determining beam indication information; where the beam indication information is used to indicate a terminal to receive or send the target signal or the target channel in a corresponding time slot using a receiving beam of a reference signal indicated by a target transmission configuration indication state (TCI state); and sending the beam indication information to the terminal. It overcomes a technical problem in the prior art that beam transmissions cannot be effectively realized for a CSI-RS, an SRS and a non-UE dedicated PDCCH.

## Description

This application claims priority to Chinese Patent Application No. 202210461701.X, filed with the China National Intellectual Property Administration on April 28, 2022 and entitled "BEAM DETERMINING METHOD, APPARATUS AND READABLE STORAGE MEDIUM", Chinese Patent Application No. 202210920197.5, filed with the China National Intellectual Property Administration on August 01, 2022 and entitled "BEAM DETERMINING METHOD, APPARATUS AND READABLE STORAGE MEDIUM", Chinese Patent Application No. 202210970334.6, filed with the China National Intellectual Property Administration on August 12, 2022 and entitled "BEAM DETERMINING METHOD, APPARATUS AND READABLE STORAGE MEDIUM", and Chinese Patent Application No. 202211502246.X, filed with the China National Intellectual Property Administration on November 28, 2022 and entitled "BEAM DETERMINING METHOD, APPARATUS AND READABLE STORAGE MEDIUM", all of which are hereby incorporated by reference in their entireties.

### TECHNICAL FIELD

The present disclosure relates to the field of communication technologies and, in particular, to a beam determining method, an apparatus and a readable storage medium.

### BACKGROUND

In Rel-17, a common beam is used for a dedicated physical downlink control channel (English: Physical Downlink Control Channel, abbreviation: PDCCH), and a beam indication thereof is completed via a downlink control information (English: Downlink Control Information, abbreviation: DCI) format (such as DCI format 1_1/1_2). The dedicated physical downlink control channel (i.e., UE-dedicated PDCCH) here refers to that a search space (i.e., search space) associated with a corresponding control resource set (i.e., CORESET) is configured as user equipment specific (i.e., UE-specific).

However, for one or some reference signals or channels, such as a channel state information reference signal (English: Channel State Information-Reference Signal, abbreviation: CSI-RS), a sounding reference signal (English: Sounding Reference Signal, abbreviation: SRS) and a non-dedicated physical downlink control channel (i.e., non-UE dedicated PDCCH), it is possible not to use a transceiver configuration indicator (English: Transceiver Configuration Indicator, abbreviation: TCI) state (i.e., TCI state) indicated by a base station or to use one of the TCI states indicated by the base station. In this case, in the prior art, it cannot effectively implement how to perform a beam indication under a unified transceiver configuration indicator (i.e., unified TCI) architecture and how to select one of the TCI states for transmission when two TCI states are indicated in the unified TCI architecture.

Therefore, in the prior art, beam transmissions for the CSI-RS, the SRS and the non-UE dedicated PDCCH (i.e., non-dedicated PDCCH) cannot be effectively realized.

### SUMMARY

The present disclosure provides a beam determining method, an apparatus and a readable storage medium, and solves a technical problem in the prior art that beam transmissions cannot be effectively realized for a CSI-RS, an SRS and a non-UE dedicated PDCCH.

In a first aspect, the present disclosure provides a beam determining method, applied to a base station and applied under a unified transmission configuration indication (unified TCI) architecture, including:
for a target signal or a target channel, determining beam indication information; where the beam indication information is used to indicate a terminal to receive or send the target signal or the target channel in a corresponding time slot using a receiving beam of a reference signal indicated by a target transmission configuration indication state (TCI state);
sending the beam indication information to the terminal.

Optionally, the target signal includes: an aperiodic channel state information reference signal (Aperiodic CSI-RS), a semi-persistent channel state information reference signal (semi-persistent CSI-RS) or a sounding reference signal (SRS); and the target channel includes: a non-dedicated physical downlink control channel (PDCCH) or a physical uplink shared channel (PUSCH); where for the target signal or the target channel, the determining the beam indication information includes:
for the Aperiodic CSI-RS, obtaining the beam indication information through a radio resource control (RRC) configuration; or, obtaining the beam indication information through a predefined manner;
for the semi-persistent CSI-RS, obtaining the beam indication information through a medium access control control element (MAC-CE) indication used for activating the semi-persistent CSI-RS;
for the SRS, obtaining the beam indication information through the RRC configuration; or, determining, through a predefined manner, an association relationship between an SRS resource set and the TCI state in the unified TCI architecture, and obtaining the beam indication information according to the association relationship; where the association relationship includes a first association relationship or a second association relationship;
for the non-dedicated PDCCH, obtaining the beam indication information by configuring each control resource set (CORESET) through RRC;
for the PUSCH, obtaining the beam indication information; where the beam indication information is used to indicate that a sending beam used by the terminal is a receiving beam used by a control resource set in a time slot for scheduling the PUSCH or a receiving beam used by a control resource set in a time slot for transmitting the PUSCH.

In embodiments of the present disclosure, under the unified TCI architecture, the beam indication is carried out for the CSI-RS, the SRS and the non-UE dedicated PDCCH, so that the terminal can realize the transmission of the CSI-RS, the SRS and the non-UE dedicated PDCCH according to the beam indication.

Optionally, if the SRS is a semi-persistent sounding reference signal (semi-persistent SRS), for the target signal or the target channel, the determining the beam indication information includes:
for the semi-persistent SRS, obtaining the beam indication information through the MAC-CE indication used for activating the semi-persistent SRS.

Optionally, the obtaining the beam indication information through the radio resource control (RRC) configuration includes:
configuring, through the RRC, whether a receiving beam of the Aperiodic CSI-RS uses a receiving beam indicated by the TCI state in the unified TCI architecture;
if the receiving beam indicated by the TCI state in the unified TCI architecture is used, using a receiving beam indicated by one TCI state among N TCI state(s) in the TCI state(s).

Optionally, the configuring, through the RRC, whether the receiving beam of the Aperiodic CSI-RS uses the receiving beam indicated by the TCI state in the unified TCI architecture includes:
configuring, in a channel resource, through the RRC, whether the receiving beam of the Aperiodic CSI-RS uses the receiving beam indicated by the TCI state in the unified TCI architecture; or
configuring, through the RRC, at least one Aperiodic CSI-RS resource set to associate with a channel state information reference signal aperiodic trigger state (CSI-AperiodicTriggerState) to obtain association information, where the association information is used to indicate that the associated at least one Aperiodic CSI-RS resource set does not use the receiving beam indicated by the TCI state in the unified TCI architecture, or to indicate that one resource set in the at least one Aperiodic CSI-RS resource set uses the receiving beam indicated by one TCI state among N TCI state(s) in the indicated TCI state(s); where one trigger state is associated with the at least one Aperiodic CSI-RS resource set.

Optionally, the obtaining the beam indication information through the predefined manner includes:
through the predefined manner, determining that the beam indication information is an indication for the terminal to use a receiving beam used by a control resource set in which downlink control information (DCI) used for activating the Aperiodic CSI-RS is located.

Optionally, the determining that the beam indication information is the indication for the terminal to use the receiving beam used by the control resource set in which the downlink control information (DCI) used for activating the Aperiodic CSI-RS is located includes:
if a number of receiving beams used by the control resource set in which DCI used for activating the Aperiodic CSI-RS is located is greater than 1, determining that the beam indication information is an indication for the terminal to use one receiving beam of a plurality of receiving beams used by the control resource set in which the DCI used for activating the Aperiodic CSI-RS is located.

In embodiments of the present disclosure, an association relationship is obtained by configuring whether to use a common beam in a channel resource, or configuring at least one Aperiodic CSI-RS resource set to associate with a channel state information reference signal aperiodic trigger state. one trigger state is associated with at least one Aperiodic CSI-RS resource set, and it indicates, through the association relationship, that at least one resource set associated not to use the common beam, or one of the resource sets associated to use a receiving beam indicated by a first TCI state or a second TCI state in indicated TCI states. A beam indication for the Aperiodic CSI-RS is realized.

Optionally, the receiving beam used by the control resource set in which the DCI used for activating the Aperiodic CSI-RS is located is a receiving beam used by the control resource set in a time slot for activating the Aperiodic CSI-RS or a receiving beam used by the control resource set in a time slot for receiving the Aperiodic CSI-RS.

Optionally, if the SRS is an aperiodic sounding reference signal (Aperiodic SRS), the beam indication information is used to indicate that the sending beam used by the terminal is a receiving beam used by a control resource set in a time slot for activating the Aperiodic SRS or a receiving beam used by a control resource set in a time slot for sending the Aperiodic SRS.

Optionally, the obtaining the beam indication information through the medium access control control element (MAC-CE) indication used for activating the semi-persistent CSI-RS includes:
indicating, through the MAC-CE used for activating the semi-persistent CSI-RS, whether a receiving beam of the semi-persistent CSI-RS uses a receiving beam indicated by the TCI state in the unified TCI architecture;
if the receiving beam indicated by the TCI state in the unified TCI architecture is used, using a receiving beam indicated by one TCI state among N TCI state(s) in the TCI state(s).

Optionally, the obtaining the beam indication information through the MAC-CE indication used for activating the semi-persistent SRS includes:
indicating, through the MAC-CE used for activating the semi-persistent SRS, whether a receiving beam of the semi-persistent SRS uses a receiving beam indicated by the TCI state in the unified TCI architecture;
based on that the receiving beam indicated by the TCI state in the unified TCI architecture is used, using a receiving beam indicated by one TCI state among N TCI state(s) in the TCI state(s).

Optionally, the obtaining the beam indication information by configuring each control resource set (CORESET) through the RRC includes:
if the CORESET is a first type of CORESET, determining to use a receiving beam indicated by the TCI state in the unified TCI architecture and indicating, through a media access control control element (MAC-CE) or a TCI state domain in a first downlink control information format, that one TCI state among N TCI state(s) is used for a beam transmission, where the first type of CORESET is a corresponding CORESET for a dedicated PDCCH;
if the CORESET is a second type of CORESET, configuring, through high-level signaling, whether to use a receiving beam indicated by the TCI state in the unified TCI architecture; based on that the configured second type of CORESET uses the receive beam indicated by the TCI state in the unified TCI architecture, using one TCI state among N TCI state(s) in a TCI state indication in the unified TCI architecture for a beam transmission, or, indicating, through a media access control control element or a TCI state domain in a first downlink control information format, that one TCI state among N TCI state(s) is used for a beam transmission; based on that the configured second type of CORESET does not use the receiving beam indicated by the TCI state in the unified TCI architecture, configuring, through a predefined manner, a TCI state for a beam transmission; where the second type of CORESET is a CORESET using/not using the TCI state indication in unified TCI architecture;
for a multi-transmission receiving point (mTRP) of a PDCCH, configuring any search space in two associated search spaces to use the TCI state indication in the unified TCI architecture for a beam transmission or not to use the TCI state indication in the unified TCI architecture for a beam transmission.

In embodiments of the present disclosure, if the CORESET is a first type of CORESET, it is determined to use a common beam, and it indicates a first TCI state or a second TCI state to be used for a beam transmission through a MACE-CE or a TCI state domain in a first downlink control information format (such as DCI format 1_1/1_2); if the CORESET is a second type of CORESET, a common beam is not used or a first TCI state or a second TCI state is used for a beam transmission, which are configured through high-level signaling; if the CORESET is a second type of CORESET and a common beam is used, it determines to use a first TCI state or a second TCI state in a TCI state indication in the unified TCI architecture for a beam transmission in a same manner when the CORESET is the first type of CORESET; if the CORESET is a second type of CORESET/a third type of CORESET, and if a common beam is not used, a TCI state is configured for a beam transmission in a predefined manner (i.e., Legacy). For the multi-transmission receiving point (mTRP) of the PDCCH, either of the two associated search spaces uses a common beam or does not use the common beam. A beam indication for the non-UE dedicated PDCCH is realized.

Optionally, the obtaining the beam indication information through the RRC configuration includes:
configuring, through the RRC, whether a receiving beam of the SRS uses a receiving beam indicated by the TCI state in the unified TCI architecture in a SRS resource or the SRS resource set;
if the receiving beam indicated by the TCI state in the unified TCI architecture is used, configuring, through the RRC, or updating, through MAC-CE, each SRS resource set to use one TCI state among indicated N TCI state(s) for a beam transmission; where all SRS resources in a same SRS resource set use a same TCI state;
if the receiving beam indicated by the TCI state in the unified TCI architecture is not used, configuring, through each SRS resource in RRC, a TCI state thereof; where a power control parameter used by the SRS in a same SRS resource set uses a power control parameter associated with a TCI state of the SRS with the lowest index in the SRS resource set.

Optionally, the determining, through the predefined manner, the association relationship between the SRS resource set and the TCI state in the unified TCI architecture includes:
based on an ID of the TCI state in the unified TCI architecture or configuring a configuration order of the SRS resource set, determining a first association relationship between the SRS resource set and the TCI state in the unified TCI architecture, where the first association relationship is, for the SRS resource set, an association relationship for using a receiving beam used by the TCI state in the unified TCI architecture; where a usage of the SRS is configured as a codebook/non-codebook SRS resource set; or,
determining, through a predefined manner, a second association relationship between the SRS resource set and the TCI state in the unified TCI architecture, where the second association relationship is, for the SRS resource set, an association relationship for using a receiving beam used by a control resource set in which DCI used for activating the SRS resource set is located.

In embodiments of the present disclosure, a beam indication for the SPS is realized by configuring through the RRC whetherto use a common beam, or by determining, in a predefined manner, an association of a SRS resource set with a TCI state in a unified TCI architecture.

In a second aspect, the present disclosure provides a beam determining method, applied to a terminal, including:
receiving beam indication information sent by a base station; where the beam indication information is used to indicate the terminal to receive or send a target signal or a target channel in a corresponding time slot using a receiving beam of a reference signal indicated by a target transmission configuration indication state (TCI state);
based on the beam indication information, determining whether to use a receiving beam indicated by a TCI state in a unified TCI architecture.

Optionally, the target signal includes: an aperiodic channel state information reference signal (Aperiodic CSI-RS), a semi-persistent channel state information reference signal (semi-persistent CSI-RS) or a sounding reference signal (SRS); and the target channel includes: a non-dedicated physical downlink control channel (PDCCH) or a physical uplink shared channel (PUSCH); before receiving the beam indication information sent by the base station, and the method further includes:
receiving beams sent by the base station through scanning;
measuring the beams to obtain beam measurement results;
comparing the beam measurement results to determine a beam with best beam quality, and using index information of the beam with best beam quality as beam information;
where the beam indication information is determined by the base station based on the beam information.

In embodiments of the present disclosure, it achieves beam indications for CSI-RS, SRS, and non-UE dedicated PDCCH under the unified TCI architecture. A base station can indicate whether to use a common beam through configuring or adopting a predefined manner, so as to determine beam indication information, and send the beam indication information to the terminal. The terminal receives the beam indication information and receives or sends the target signal or the target channel in a corresponding time slot using a receiving beam of a reference signal indicated by the one specific TCI state according to an indication.

In a third aspect, the present disclosure provides a beam determining apparatus, applied in a base station and under a unified transmission configuration indication (unified TCI) architecture, where the apparatus includes: a memory, a transceiver, a processor;
the memory is configured to store a computer program;
the transceiver is configured to receive and send data under control of a processor;
the processor is configured to read the computer program in the memory and execute the following operations:
   for a target signal or a target channel, determining beam indication information; where the beam indication information is used to indicate a terminal to receive or send the target signal or the target channel in a corresponding time slot using a receiving beam of a reference signal indicated by a target transmission configuration indication state (TCI state);
sending the beam indication information to the terminal.

In a fourth aspect, the present disclosure provides beam determining apparatus, applied in a terminal, and the apparatus includes: a memory, a transceiver, a processor;
the memory is configured to store a computer program;
the transceiver is configured to receive and send data under control of a processor;
the processor is configured to read the computer program in the memory and execute the following operations:
   receiving beam indication information sent by a base station; where the beam indication information is used to indicate the terminal to receive or send a target signal or a target channel in a corresponding time slot using a receiving beam of a reference signal indicated by a target transmission configuration indication state (TCI state);
   based on the beam indication information, determining whether to use a receiving beam indicated by a TCI state in a unified TCI architecture.

In a fifth aspect, the present disclosure provides a beam determining apparatus, applied in a base station and under a unified transmission configuration indication (unified TCI) architecture, where the apparatus includes:
a processing unit, configured to, for a target signal or a target channel, determine beam indication information; where the beam indication information is used to indicate a terminal to receive or send the target signal or the target channel in a corresponding time slot using a receiving beam of a reference signal contained by a target transmission configuration indication state (TCI state);
a sending unit, configured to send the beam indication information to the terminal.

In a sixth aspect, the present disclosure provides a beam determining apparatus, applied in a terminal, where the apparatus includes:
a receiving unit, configured to receive beam indication information sent by a base station; where the beam indication information is used to indicate the terminal to receive or send a target signal or a target channel in a corresponding time slot using a receiving beam of a reference signal indicated by a target transmission configuration indication state (TCI state);
a determining unit, configured to, based on the beam indication information, determine whether to use a receiving beam indicated by a TCI state in a unified TCI architecture.

In a seventh aspect, the present disclosure provides a processor-readable storage medium, where the processor-readable storage medium stores a computer program, and the computer program is configured to enable a processor to execute the method according to any one of the first aspect or the second aspect.

The present disclosure provides a beam determining method, an apparatus, and a readable storage medium, which are applied under a unified transmission configuration indication (unified TCI) architecture. For a target signal or a target channel, beam indication information is determined and sent to a terminal to indicate the terminal to use a receiving beam of a reference signal indicated by the one TCI state (i.e., the target transmission configuration indication state) to receive or send the target signal or the target channel in a corresponding time slot. Therefore, a beam indication for a certain signal/channel or certain signals/channels can be performed under the unified TCI architecture, which enables the terminal to realize the transmission for the certain signal/channel or certain signals/channels in accordance with the beam indication.

It should be understood, the content described in the above summary is not intended to limit key or important features of the embodiments of the present disclosure, or it is not intended to limit the scope of the present disclosure. Other features of the present disclosure will become easily understood from the following description.

### BRIEF DESCRIPTION OF DRAWINGS

In order to more clearly illustrate technical solutions of the present disclosure or the prior art, the following will briefly introduce the accompanying drawings that need to be used in the description of the embodiments or the prior art. Obviously, the accompanying drawings described below are some embodiments of the present disclosure, and for those of ordinary skill in the art, other accompanying drawings can be obtained based on these accompanying drawings without paying creative efforts.
FIG. 1 is a schematic diagram of a TCI state indication being used for a terminal-specific PDCCH MAC CE provided by an embodiment of the present disclosure.
FIG. 2 is an interactive schematic diagram of a beam determining method provided by an embodiment of the present disclosure.
FIG. 3 is a flowchart of a beam determining method provided by an embodiment of the present disclosure.
FIG. 4 is a flowchart of a beam determining method provided by another embodiment of the present disclosure.
FIG. 5 is a schematic structural diagram of a beam determining apparatus provided by an embodiment of the present disclosure.
FIG. 6 is a schematic structural diagram of a beam determining apparatus provided by another embodiment of the present disclosure.
FIG. 7 is a schematic structural diagram of a beam determining apparatus provided by yet another embodiment of the present disclosure.
FIG. 8 is a schematic structural diagram of a beam determining apparatus provided by yet still another embodiment of the present disclosure.

### DETAILED DESCRIPTION OF EMBODIMENTS

Term "and/or" in the present disclosure is an association relationship describing associated objects, and represents that there may be three relationships. For example, A and/or B may represent three situations: presence of A only, presence of both A and B, and presence of B only. A character "/" generally represents an "or" relationship between contextual objects.

The technical solutions in the embodiments of the present disclosure will be described as follows clearly and completely in conjunction with accompanying drawings in the embodiments of the present disclosure. Apparently, the described embodiments are merely a part rather than all of the embodiments of the present disclosure. Based on the embodiments in the present disclosure, all other embodiments obtained by those of ordinary skill in the art without paying creative work shall fall within the protection scope of the present disclosure.

In order to clearly understand the technical solutions of the present disclosure, the solution of the prior art is first introduced in detail. In the prior art, in Rel-15/16, a beam of a periodic/semi-persistent channel state information reference signal (i.e., P/SP CSI-RS) is configured through radio resource control (English: Radio Resource Control, abbreviation: RRC); a beam indication for an aperiodic channel state information reference signal (i.e., Aperiodic CSI-RS or AP-CSI-RS) is indicated by channel state information reference signal aperiodic trigger state (i.e., CSI-AperiodicTriggerState) configured through RRC combined with a channel state information request (i.e., CSI-Request) field in the DCI, and time for sending the AP-CSI-RS is configured in a non-zero power channel state information reference signal resource set (i.e., NZP-CSI-RS-ResourceSet, where NZP is short for: Non zero power); and for a beam indication of the SRS, each sounding reference signal resource (i.e., per SRS resource) is configured by the RRC and updated by a media access control control element (MAC-CE).

In a unified TCI architecture in Rel-17, a beam indication for the SRS is indicated via a DCI format 1_1/1_2. In Rel-15/16, a beam indication for the PDCCH is realized through CORESET being configured by the RRC and the CORESET control resource set being activated by the MAC-CE.

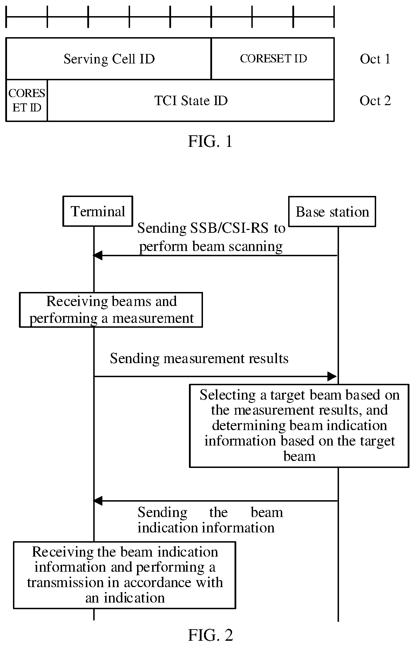

An activation of the used MAC-CE can be seen in a schematic diagram of a TCI state indication being used for a terminal-specific PDCCH MAC CE shown in FIG. 1. In FIG. 1, Serving Cell ID represents a serving cell identifier, CORESET ID represents a control resource set identifier, TCI state ID represents a transmission configuration indication state identifier, Oct1 represents eight bits 1, and Oct2 represents eight bits 2. In Rel-17, a common beam (i.e., common beam) is used for a UE-dedicated PDCCH, and a beam indication thereof is completed via DCI format 1_1/1_2. The UE-dedicated PDCCH here refers to that a search space associated with a corresponding CORESET is configured as UE-specific; and for non UE-dedicated PDCCH, the common beam is not necessarily to be used. The common beam here refers to that under the unified TCI architecture, after one TCI state is indicated via a TCI state domain in DCI format 1_1/1_2 and takes effect, a terminal uses a receiving beam of a reference signal indicated in the TCI state indicated by a base station to receive a PDCCH, a physical downlink shared channel (English: Physical Downlink Shared Channel, PDSCH), and send a physical uplink control channel (English: Physical Uplink Control Channel, abbreviation: PUCCH) and a physical uplink shared channel (English: Physical Uplink Shared Channel, abbreviation: PUSCH).

It should be noted that the definition of common beam here is applicable to all places where common beam is used in the following embodiments.

Although Rel-17 introduces the beam indication under the unified TCI architecture, under the unified TCI architecture, after one TCI state is indicated by the TCI state domain in DCI format 1_1 or 1_2 and an indicated beam takes effect, the terminal uses the receiving beam of the reference signal contained in the TCI state indicated by the base station to receive/send the subsequent downlink channel (PDCCH/PDSCH) and uplink channel (PUCCH/PUSCH). However, for CSI-RS, SRS and non-UE dedicated PDCCH, it is possible not to use the TCI state indicated by the base station or to use a receiving beam indicated by one of the TCI states indicated by the base station. In this case, in the prior art, it cannot effectively implement how to perform a beam indication under the unified TCI architecture and how to select one of the TCI states for transmission when two TCI states are indicated in the unified TCI architecture.

The inventors further researched a found that beam indications for the CSI-RS, the SRS and the non-UE dedicated PDCCH under the unified TCI architecture can be realized by configuring or adopting a predefined manner to indicate whether to use the common beam, thereby determining beam indication information, and sending the beam indication information to a terminal to indicate the terminal to receive or send the target signal or the target channel in a corresponding time slot using a receiving beam of a reference signal indicated by the one specific TCI state.

Therefore, based on the creative research of the inventors described above, beam determining methods are proposed in the present disclosure, in the present disclosure, a base station performs beam scanning and uses beam information fed back from a terminal as a source reference signal for a later TCI state configuration, where the beam here contains different types of beams, such as beam indications of the CSI-RS, the SRS, and the non-UE dedicated PDCCH that cannot be solved by prior art. The base station sends a periodic/Aperiodic CSI-RS, an SRS or a non-UE dedicated PDCCH, and the terminal uses a receiving beam of a type-D source RS indicated in a determined TCI state as instructed by the base station to receive or send the periodic/non-periodic CSI-RS, the SRS or the non-UE dedicated PDCCH in a corresponding time slot, so as to solve the problem of beam indications for an indicated reference signal (CSI-RS/SRS) as well as a non-UE-dedicated channel (non-UE-dedicated) under a unified TCI architecture.

In conjunction with FIG. 2, FIG. 2 is an interactive schematic diagram of a beam determining method provided by an embodiment of the present disclosure. As shown in FIG. 2, in embodiments of the present disclosure, a base station performs beam scanning by sending SSB (consisting of three parts together, namely, Primary Synchronization Signals (English: Primary Synchronization Signals, abbreviation: PSS), Secondary Synchronization Signals (English: Secondary Synchronization Signals, abbreviation: SSS), Physical Boardcast Channel (Physical Boardcast Channel, PBCH))/CSI-RS. A terminal receives beams sent by the base station and measures the beams to obtain beam measurement results. The terminal receives beams sent by the base station and measures the beams to obtain beam measurement results, compares the measurement results to determine a target beam with best beam quality, the terminal feeds back beam information to the base station, such as beam index information corresponding to the target beam, the base station receives the beam information fed back from the terminal and selects the target beam, and the base station uses the selected target beam as a source reference signal (i.e., reference signal) for a TCI state configuration. The base station then carries out a beam indication based on the selected target beam and sends determined beam indication information to the terminal, and the terminal receives the beam indication information sent by the base station and performs a transmission in accordance with the indication. The source reference signal may be a CSI-RS or an SSB to inform the terminal to use a receiving beam used for receiving this reference signal to receive other channels (PDSCH/PDCCH).

Embodiments of the present disclosure will be described below with reference to the accompanying drawings.

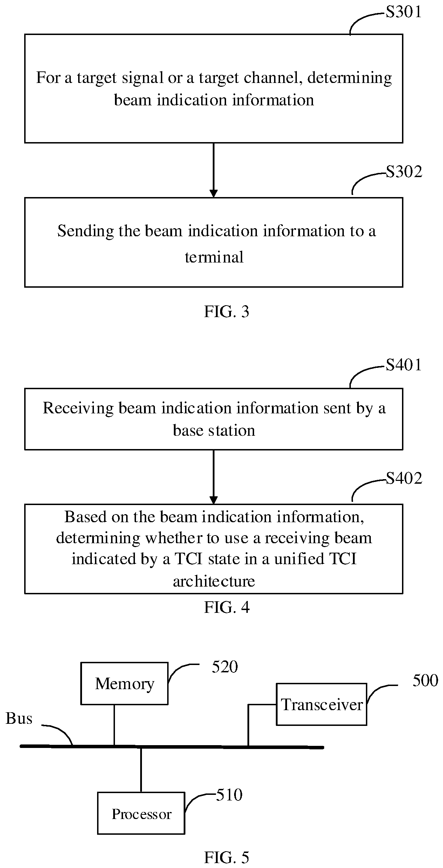

FIG. 3 is a flowchart of a beam determining method provided by an embodiment of the present disclosure, as shown in FIG. 3, an executing entity of the beam determining method provided by the present embodiment is a base station, and the beam determining method is applied under a unified transmission configuration indication (unified TCI) architecture. The beam determining method provided by the embodiment of the present disclosure includes the following steps.

Step 301, for a target signal or a target channel, determining beam indication information.

Where the beam indication information is used to indicate a terminal to receive or send the target signal or the target channel in a corresponding time slot using a receiving beam of a reference signal indicated by a target transmission configuration indication state (TCI state).

For the target signal or the target channel, a beam indication can be performed through a configuration or a predefined manner to indicate the terminal whether to use a common beam. If the terminal uses the common beam, it determines a receiving beam indicated by which TCI state is used, and if the terminal does not use the common beam, it uses an original or a conventional indication manner to realize a transmission.

Step 302, sending the beam indication information to the terminal.

The terminal uses a corresponding TCI state for the transmission based on the received beam indication information.

Optionally, the target signal includes: an aperiodic channel state information reference signal (Aperiodic CSI-RS), a semi-persistent channel state information reference signal (semi-persistent CSI-RS) or a sounding reference signal (SRS); and the target channel includes: a non-dedicated physical downlink control channel (PDCCH); where for the target signal or the target channel, the determining the beam indication information can be realized by the following steps.

Step a1, for the Aperiodic CSI-RS, obtaining the beam indication information through a radio resource control (RRC) configuration; or, obtaining the beam indication information through a predefined manner; optionally, the obtaining the beam indication information through the predefined manner includes:
through the predefined manner, determining that the beam indication information is an indication for the terminal to use a receiving beam used by a control resource set in which downlink control information (DCI) used for activating the Aperiodic CSI-RS is located.

Specifically, for the Aperiodic CSI-RS, through a predefined manner, an association relationship of a non-periodic CSI-RS (i.e., the Aperiodic CSI-RS) and a TCI state under the unified TCI architecture may also be determined as a receiving beam used by a CORESET in which DCI used for activating the non-periodic CSI-RS is located. Then for the Aperiodic CSI-RS, through the predefined manner, it may also indicates the terminal to use the receiving beam used by the control resource set in which the downlink control information (DCI) used for activating the Aperiodic CSI-RS is located.

Optionally, the determining that the beam indication information is the indication for the terminal to use the receiving beam used by the control resource set in which the downlink control information (DCI) used for activating the Aperiodic CSI-RS is located includes:
if a number of receiving beams used by the control resource set in which DCI used for activating the Aperiodic CSI-RS is located is greater than 1, determining that the beam indication information is an indication for the terminal to use one receiving beam of a plurality of receiving beams used by the control resource set in which the DCI used for activating the Aperiodic CSI-RS is located.

Specifically, if the number of receiving beams used by the control resource set in which the downlink control information used for activating the Aperiodic CSI-RS is located is greater than 1, one of the receiving beams is used. For example, the plurality of receiving beams used by the control resource set in which the DCI used for activating the Aperiodic CSI-RS is located are a receiving beam 1, a receiving beam 2, through the predefined manner, it is determined to use the receiving beam 1 or the receiving beam 2 used by the control resource set in which the DCI for activating the Aperiodic CSI-RS is located.

Optionally, the receiving beam used by the control resource set in which the DCI used for activating the Aperiodic CSI-RS is located is a receiving beam used by the control resource set in a time slot for activating the Aperiodic CSI-RS or a receiving beam used by the control resource set in a time slot for receiving the Aperiodic CSI-RS.

Specifically, for the receiving beam used by the control resource set in which the DCI used for activating the Aperiodic CSI-RS is the receiving beam used by the control resource set in the time slot for activating the Aperiodic CSI-RS (i.e., a beam of CORESET in a time slot in which DCI of the trigger Aperiodic CSI-RS is located used for the corresponding Aperiodic CSI-RS):
in the n-th time slot, the base station issues beam indication DCI1 (DCI format1_1/1_2), which includes a TCI state1, to indicate that beams used by all subsequent UE-dedicated PDCCH/PDSCH/PUSCH/PUCCH are receiving beams of a downlink reference signals contained in the TCI state1;
at the time n+k, the base station issues DCI2 (DCI format 0_1/_2), trigger Aperiodic CSI-RS is sent at the time n+k+5; and the DCI2 is carried in PDCCH2 on CORESET2, and a beam used to send PDCCH2 uses a beam in the TCI state1 indicated by the base station at the time n;
at the time n+k+5, the terminal receives the Aperiodic CSI-RS using a receiving beam that receives a reference signal of the TCI state1.

The receiving beam used by the control resource set in which the DCI used for activating the Aperiodic CSI-RS is located is the receiving beam used by the control resource set in the time slot for receiving the Aperiodic CSI-RS (i.e., a beam of the CORESET in a time slot where the Aperiodic CSI-RS is sent used for the corresponding Aperiodic CSI-RS):
in the n-th time slot, the base station issues beam indication DCI1 (DCI format1_1/1_2), which includes the TCI state1, to indicate that beams used by all subsequent UE-dedicated PDCCH/PDSCH/PUSCH/PUCCH are receiving beams of a downlink reference signals contained in the TCI state1;
at the time n+k, the base station issues DCI2 (DCI format 0_1/_2), trigger Aperiodic CSI-RS is sent at the time n+k+5; and the DCI2 is carried in PDCCH2 on CORESET2, and a beam used to send PDCCH2 uses a beam in the TCI state1 indicated by the base station at the time n;
at the time n+k+5, a beam on CORESET2 is updated to a TCI state2;
where, at the time n+k+5, the terminal receives the Aperiodic CSI-RS using a receiving beam that receives a reference signal from the TCI state2.

Step a2, for the semi-persistent CSI-RS, obtaining the beam indication information through a medium access control control element (MAC-CE) indication used for activating the semi-persistent CSI-RS.

Optionally, the obtaining the beam indication information through the medium access control control element (MAC-CE) indication used for activating the semi-persistent CSI-RS includes:
step a21, indicating, through the MAC-CE used for activating the semi-persistent CSI-RS, whether a receiving beam of the semi-persistent CSI-RS uses a receiving beam indicated by the TCI state in the unified TCI architecture;
step a21, if the receiving beam indicated by the TCI state in the unified TCI architecture is used, using a receiving beam indicated by one TCI state among N TCI state(s) in the TCI state(s).

Specifically, for the semi-persistent CSI-RS, it indicates, through the MAC-CE used for activating the semi-persistent CSI-RS, whether to use multiple states indicated by the TCI states in the unified TCI architecture. The multiple states include: not using a state indicated by the TCI state in the unified TCI architecture, using a state indicated by one TCI state among N TCI state(s) in indicated TCI state(s) (such as "using the first TCI state in the indicated TCI state(s)" and "using the second state in the indicated TCI state(s)").

Step a3, for the SRS, obtaining the beam indication information through the RRC configuration; or, determining, through a predefined manner, an association relationship between an SRS resource set and the TCI state in the unified TCI architecture, and obtaining the beam indication information according to the association relationship; where the association relationship includes a first association relationship or a second association relationship;
where the SRS may include an aperiodic sounding reference signal (Aperiodic SRS), a periodic sounding reference signal (periodic SRS), and a semi-persistent sounding reference signal (semi-persistent SRS).

It should be noted that the SRS in step a3 may be any one of the Aperiodic SRS, the periodic SRS, and the semi-persistent SRS, all of which are applicable to the manner of determining the beam indication information in step a3, and the SRS is not specifically limited herein.

Specifically, determining, through the predefined manner, the association relationship between the SRS resource set and the TCI state in the unified TCI architecture can be realized in two ways: determining, through a predefined manner, a first association relationship between the SRS resource set and the TCI state in the unified TCI architecture, where the first association relationship is, for the SRS resource set, an association relationship for using a receiving beam used by the TCI state in the unified TCI architecture, and determining beam indication information based on the first association relationship; and determining, through a predefined manner, a second association relationship between the SRS resource set and the TCI state in the unified TCI architecture, and determining beam indication information based on the second association relationship.

The first association relation here may be a predefined association relation based on an ID or a configuration order, and the second association relation here may be an association relation indicating which receiving beam is used by the terminal.

Optionally, if the SRS is an aperiodic sounding reference signal (Aperiodic SRS), the beam indication information is used to indicate that the sending beam used by the terminal is a receiving beam used by a control resource set in a time slot for activating the Aperiodic SRS or a receiving beam used by a control resource set in a time slot for sending the Aperiodic SRS.

Specifically, for the Aperiodic SRS, the used sending beam indicated in the beam indication information is the receiving beam used by the control resource set in the time slot for activating the Aperiodic SRS (i.e., a beam of CORESET in a time slot in which the Aperiodic SRS is located used for the corresponding Aperiodic SRS):
in the n-th time slot, the base station issues beam indication DCI1 (DCI format1_1/1_2), which includes a TCI state1, to indicate that beams used by all subsequent UE-dedicated PDCCH/PDSCH/PUSCH/PUCCH are receiving beams of a downlink reference signals contained in the TCI state1;
at the time n+k, the base station issues DCI2 (DCI format 0_1/_2), trigger Aperiodic SRS is sent at the time n+k+5; and the DCI2 is carried in PDCCH2 on CORESET2, and a beam used to send PDCCH2 uses a beam in the TCI state1 indicated by the base station at the time n;
at the time n+k+5, the terminal sends the Aperiodic SRS using a receiving beam that receives a reference signal of the TCI state1.

For the Aperiodic SRS, the used sending beam indicated in the beam indication information is the receiving beam used by the control resource set in a time slot for receiving the Aperiodic SRS (i.e., a beam of CORESET in a time slot for sending the periodic SRS used for the corresponding Aperiodic SRS):
in the n-th time slot, the base station issues beam indication DCI1 (DCI format1_1/1_2), which includes a TCI state1, to indicate that beams used by all subsequent UE-dedicated PDCCH/PDSCH/PUSCH/PUCCH are receiving beams of a downlink reference signals contained in the TCI state1;
at the time n+k, the base station issues DCI2 (DCI format 0_1/_2), trigger aperiodic SRS is sent at the time n+k+5; and the DCI2 is carried in PDCCH2 on CORESET2, and a beam used to send PDCCH2 uses a beam in the TCI state1 indicated by the base station at the time n;
at the time n+k+5, a beam on CORESET2 is updated to the TCI state2;
where, at the time n+k+5, the terminal sends the Aperiodic SRS using a receiving beam that receives a reference signal from the TCI state2.

Step a4, for the non-dedicated PDCCH, obtaining the beam indication information by configuring each control resource set (CORESET) through RRC.

Specifically, for the periodic/semi-persistent CSI-RS, the base station uses a conventional RRC configuration to indicate the beam it uses. IEs configured through the RRC are as follows:

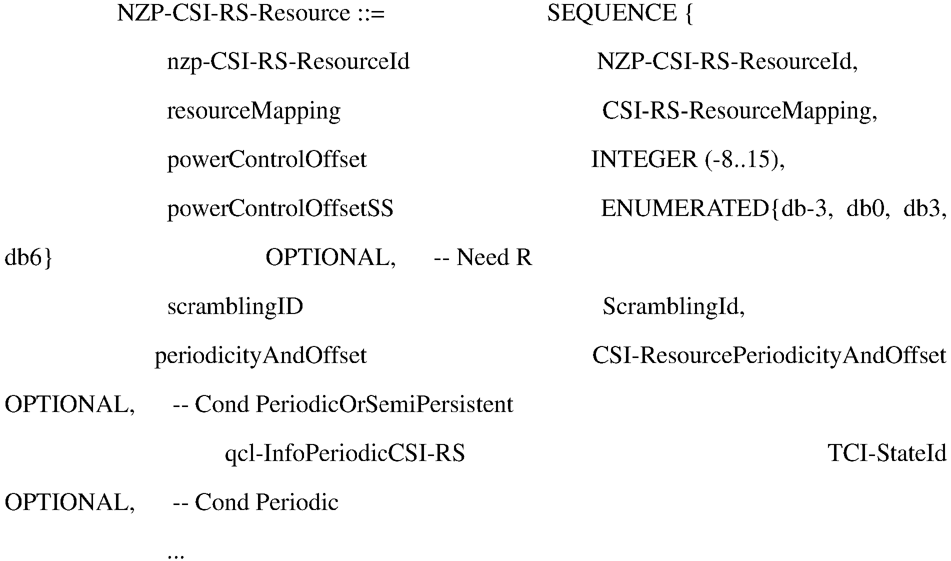

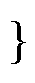

For the Aperiodic CSI-RS (i.e., Aperiodic CSI-RS), whether to use a receiving beam indicated by a TCI state in a unified TCI architecture (i.e., whether to use a common beam) is configured through the RRC. Specifically, it indicates by the configuration whether to use multiple states indicated by the TCI states in the unified TCI architecture. Exemplarily, taking the multiple states being three states as an example, the three states are "not using a CI state indication in the unified TCI state", "using a first TCI state of the indicated TCI states", and "use a second state of the indicated TCI states". In addition, at least one resource set (i.e., resource set) of the Aperiodic CSI-RS may be configured through the RRC to be associated with a channel state information reference signal aperiodic trigger state (CSI-AperiodicTriggerState) to indicate that the at least one resource set of the Aperiodic CSI-RS do not use the receiving beam indicated by the TCI state in the unified TCI architecture, or to indicate that one resource set of the Aperiodic CSI-RS use a receiving beam indicated by one TCI state of the indicated TCI states.

For the SRS, it configures, through the RRC, whether to use a common beam, or, determines, through a predefined manner, an association relationship between the SRS resource set and the common beam, and then determines beam indication information.

For the non-UE dedicated PDCCH, it configures whether to use the common beam Per CORESET, where different CORESETs may correspond to different configuration manners as well as instructions.

It is realized that under a unified TCI architecture, a beam indication for the CSI-RS, the SRS, and the non-UE dedicated PDCCH is performed through a RRC configuration or a predefined manner configuration, so that a terminal can realize transmissions of the CSI-RS, the SRS, and the non-UE dedicated PDCCH according to the beam indication.

Optionally, a target channel further includes a physical uplink shared channel (PUSCH).

For the PUSCH, the beam indication information is obtained; where the beam indication information is used to indicate that a sending beam used by the terminal is a receiving beam used by a control resource set in a time slot for scheduling the PUSCH or a receiving beam used by a control resource set in a time slot for transmitting the PUSCH.

Specifically, for the PUSCH, the beam indication information is obtained; where the beam indication information is used to indicate that a sending beam used by the terminal is the receiving beam used by the control resource set in the time slot for scheduling the PUSCH (i.e., a beam of CORESET in a time slot for scheduling the PUSCH used for the corresponding PUSCH):
in the n-th time slot, the base station issues beam indication DCI1 (DCI format1_1/1_2), which includes a TCI state1, to indicate that beams used by all subsequent UE-dedicated PDCCH/PDSCH/PUSCH/PUCCH are receiving beams of a downlink reference signals contained in the TCI state1;
at the time n+k, the base station issues DCI2 (DCI format 0_1/_2), the scheduled PUSCH is sent at the time n+k+5; and the DCI2 is carried in PDCCH2 on CORESET2, and a beam used to send PDCCH2 uses a beam in the TCI state1 indicated by the base station at the time nat the time;
at the time n+k+5, the terminal sends PUSCH using a receiving beam that receives a reference signal of the TCI state1.

For the PUSCH, beam indication information is obtained; where the beam indication information is used to indicate that a sending beam used by the terminal is the receiving beam used by the control resource set in the time slot for transmitting the PUSCH (i.e., a beam of CORESET in a time slot for sending the PUSCH used for the corresponding PUSCH):
in the n-th time slot, the base station issues beam indication DCI1 (DCI format1_1/1_2), which includes a TCI state1, to indicate that beams used by all subsequent UE-dedicated PDCCH/PDSCH/PUSCH/PUCCH are receiving beams of a downlink reference signals contained in the TCI state1;
at the time n+k, the base station issues DCI2 (DCI format 0_1/_2), the scheduled PUSCH is sent at the time n+k+5; and the DCI2 is carried in PDCCH2 on CORESET2, and a beam used to send PDCCH2 uses a beam in the TCI state1 indicated by the base station at the time nat the time;
at the time n+k+5, a beam on CORESET2 is updated to the TCI state2;
where, at the time n+k+5, the terminal sends PUSCH using a receiving beam that receives a reference signal from the TCI state2.

Optionally, if the SRS is a semi-persistent sounding reference signal (semi-persistent SRS), for the target signal or the target channel, the determining the beam indication information includes:
for the semi-persistent SRS, obtaining the beam indication information through the MAC-CE indication used for activating the semi-persistent SRS.

Specifically, if the SRS is a semi-persistent SRS, the beam indication information is obtained through a RRC configuration; or, it determines, through a predefined manner, an association relationship between an SRS resource set and a TCI state in the unified TCI architecture, and obtains beam indication information based on the association relationship; where the association relationship includes a first association relationship or a second association relationship. The beam indication information can also be obtained through the MAC-CE indication used for activating the semi-persistent SRS.

Optionally, the obtaining the beam indication information through the MAC-CE indication used for activating the semi-persistent SRS includes:
indicating, through the MAC-CE used for activating the semi-persistent SRS, whether a receiving beam of the semi-persistent SRS uses a receiving beam indicated by the TCI state in the unified TCI architecture;
if the receiving beam indicated by the TCI state in the unified TCI architecture is used, using a receiving beam indicated by one TCI state among N TCI state(s) in the TCI state(s).

Specifically, for the semi-persistent SRS, it indicates, through the MAC-CE used for activating the semi-persistent SRS, whether to use multiple states indicated by the TCI states in the unified TCI architecture. The multiple states include: not using a state indicated by the TCI state in the unified TCI architecture, using a state indicated by one TCI state among N TCI state(s) in indicated TCI state(s) (such as "using the first TCI state in the indicated TCI state(s)" and "using the second state in the indicated TCI state(s)").

Optionally, the obtaining the beam indication information through the radio resource control (RRC) configuration can be realized by the following steps:
step b1: configuring, through the RRC, whether a receiving beam of the Aperiodic CSI-RS uses a receiving beam indicated by the TCI state in the unified TCI architecture.
step b2, if the receiving beam indicated by the TCI state in the unified TCI architecture is used, using a receiving beam indicated by one TCI state among N TCI state(s) in the TCI state(s).

It configures, through the RRC, whether a beam of the Aperiodic CSI-RS uses a receiving beam indicated by the TCI state in the unified TCI architecture, specifically, which indicates whether to use multiple states indicated by the TCI states in the unified TCI architecture. The multiple states include: not using a state indicated by the TCI state in the unified TCI architecture, using a state indicated by one TCI state among N TCI state(s) in the indicated TCI state(s), where the target TCI state is the TCI state indicated for use in the beam indication information.

The configuring, through the RRC, whether the receiving beam of the Aperiodic CSI-RS uses the receiving beam indicated by the TCI state in the unified TCI architecture can be realized by the following steps:
step b11, configuring, in a channel resource, through the RRC, whether the receiving beam of the Aperiodic CSI-RS uses the receiving beam indicated by the TCI state in the unified TCI architecture; or,
step b12, configuring, through the RRC, at least one Aperiodic CSI-RS resource set to associate with a channel state information reference signal aperiodic trigger state (CSI-AperiodicTriggerState) to obtain association information, where the association information is used to indicate that the associated at least one Aperiodic CSI-RS resource set does not use the receiving beam indicated by the TCI state in the unified TCI architecture, or to indicate that one resource set in the at least one Aperiodic CSI-RS resource set uses the receiving beam indicated by one TCI state among N TCI state(s) in the indicated TCI state(s); where one trigger state is associated with the at least one Aperiodic CSI-RS resource set.

Where a time offset for sending the Aperiodic CSI-RS can be configured through the RRC, where the time offset is used to indicate that a terminal receives the Aperiodic CSI-RS at the aperiodicTriggeringOffset-th time slot after receiving downlink control information (DCI) for triggering the Aperiodic CSI-RS.

For example, N here may be 1 or 2. It indicates, through a configuration, whether to use three states indicated by the TCI states in the unified TCI architecture, which include: not using states indicated by the TCI states in the unified TCI architecture, using a state of a first TCI state in the indicated TCI states, and using a state of a second TCI state in the indicated TCI state. The resource set here may include two resource sets i.e., a first resource set (i.e., resourceSetl) and a second resource set (i.e., resourceSet2); It indicates, through the configuration, that the associated resourceSet1 and resourceSet2 do not use (i.e., neither of them use) a common beam at the same time or that one of the resourceSet1 and the resourceSet2 uses a receiving beam indicated by the first TCI state or a receiving beam indicated by the second TCI state in the indicated TCI states.

For the Aperiodic CSI-RS, it can be configured in the following two manners:
manner 1, performing configuration, in a channel resource (i.e. resourcesForChannel) to indicate whether to use the three states of the common beam, i.e. UseCommonBeam enumerate(0, 1, 2).

Specifically, it is configured as: 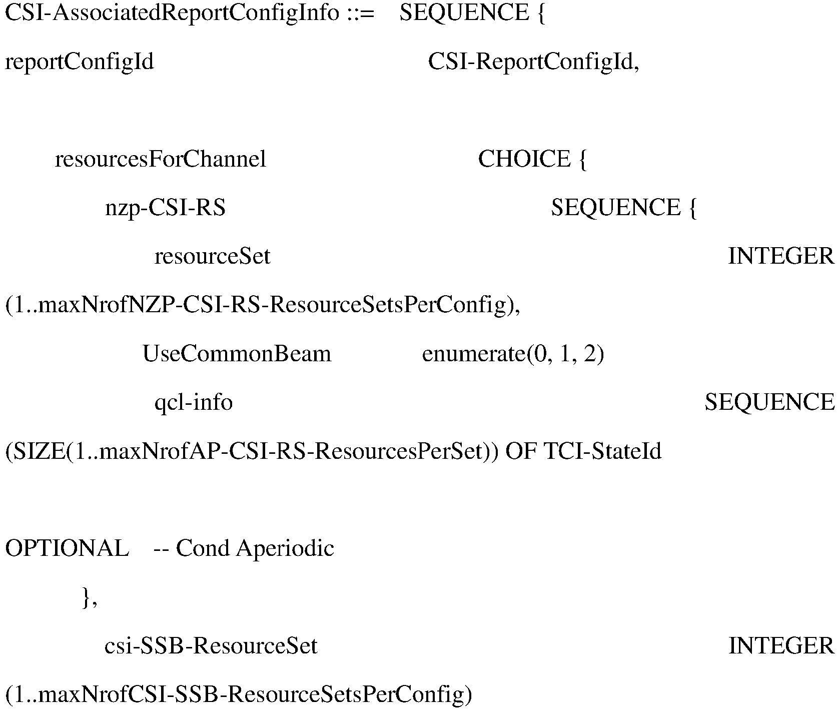 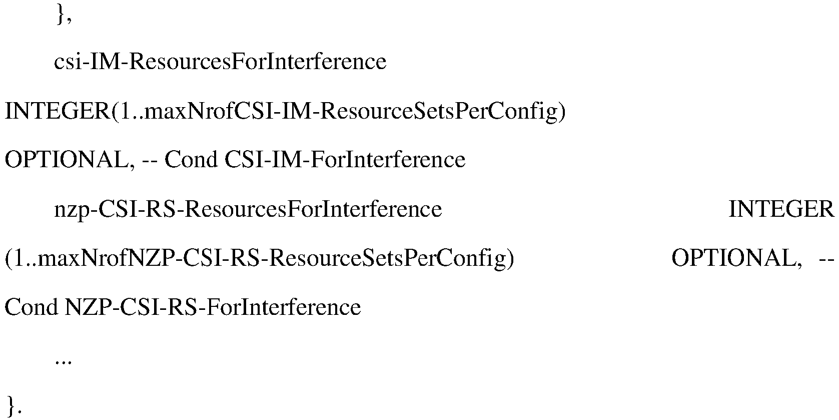 manner 2: configuring an Aperiodic CSI-RS resource set to associate with a channel state information reference signal aperiodic trigger state (i.e., CSI-AperiodicTriggerState), where one trigger state (i.e., trigger state) associates with multiple resource sets, e.g., two resource sets: resourceSet1, resourceSet2. It indicates, through a configured parameter, that the associated resourceSet1 and resourceSet2 do not use (i.e., neither of them use) a common beam at the same time or that one of the resourceSet1 and the resourceSet2 uses a receiving beam indicated by the first TCI state or a receiving beam indicated by the second TCI state in the indicated TCI states.

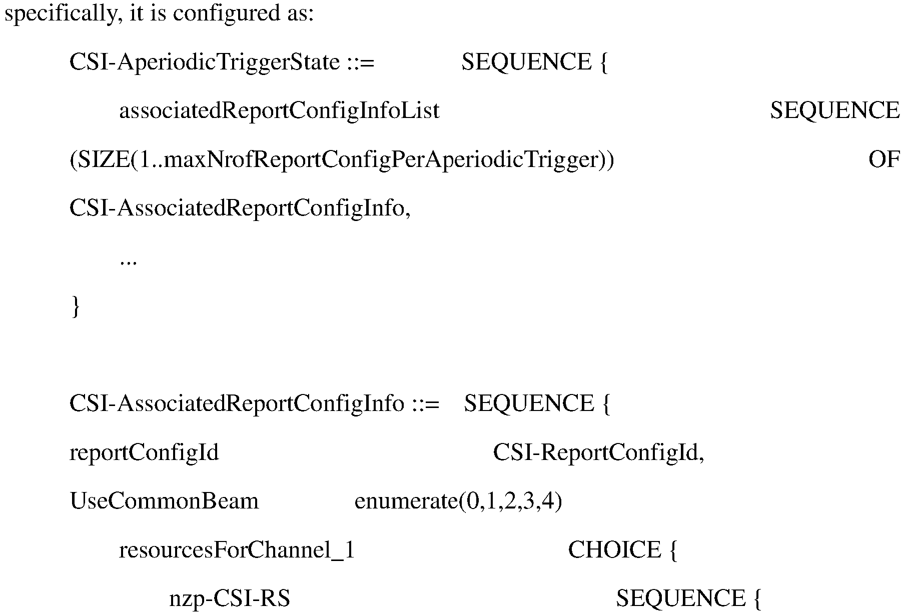

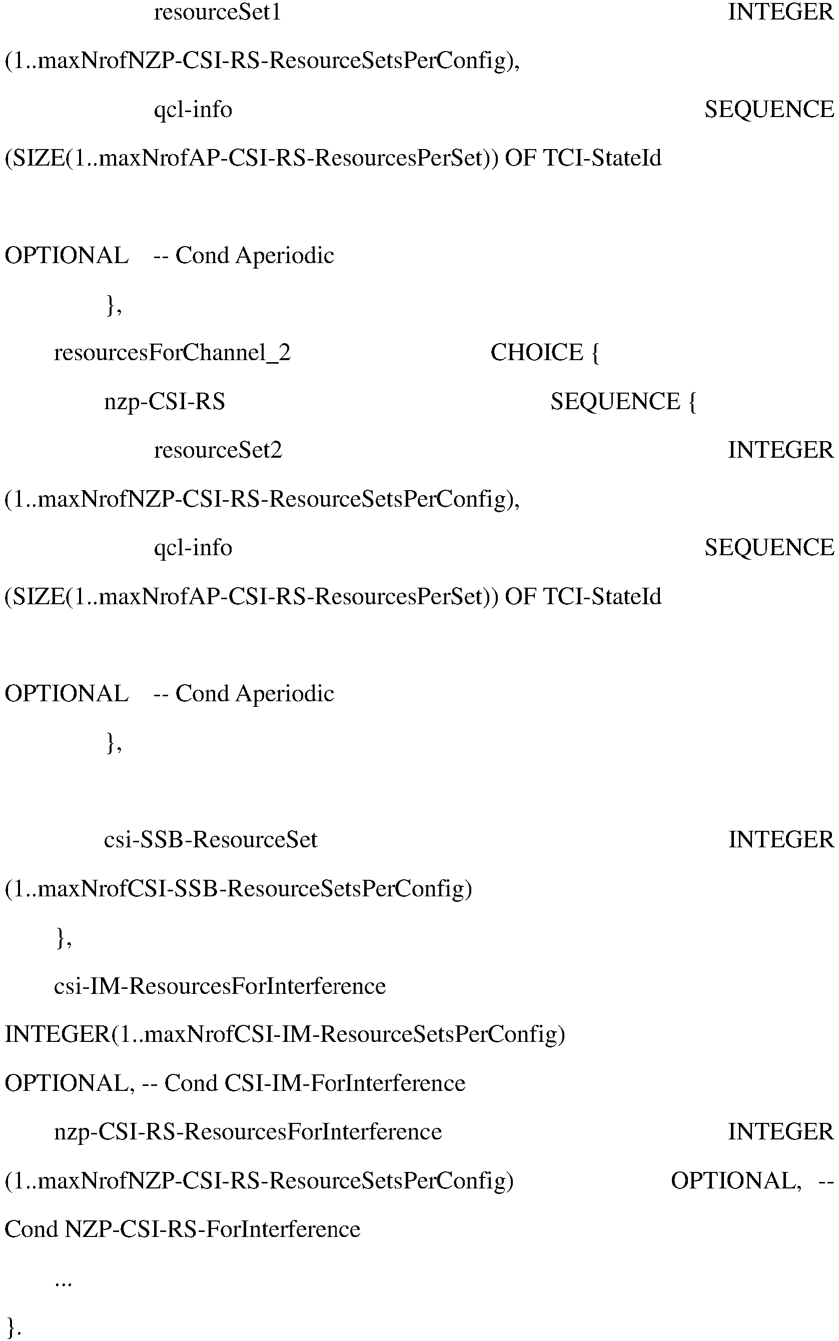

The beam indication for the Aperiodic CSI-RS is realized by the above two manners.

Exemplarily, Embodiment 1, a beam determining method is described in detail below by taking an Aperiodic CSI-RS using a receiving beam indicated by a first TCI state in an indicated TCI state as an example.

Step 11, a base station sends SSB1, SSB2, and SSB3 for downlink beam scanning.

Step 12, a terminal receives beams sent by the base station and measures the beams to obtain beam measurement results SSB1+L1-RSRP1, SSB2+L1-RSRP2, and SSB3+L1-RSRP3. The terminal compares the measurement results and finds that beam quality of L1-RSRP3 corresponding to the SSB3 is the best, and the terminal feeds back to the base station beam index information SSB3+L1-RSRP3. The SSB3+L1-RSRP3 here can be used as beam information, and the terminal sends the beam information to the base station.

Step 13, the base station configures, through the RRC signaling, a beam of the Aperiodic CSI-RS "to use a receiving beam indicated by a first TCI state of indicated TCI states" (i.e., UseCommonBeam is configured as 1). The configured IEs are as follows:

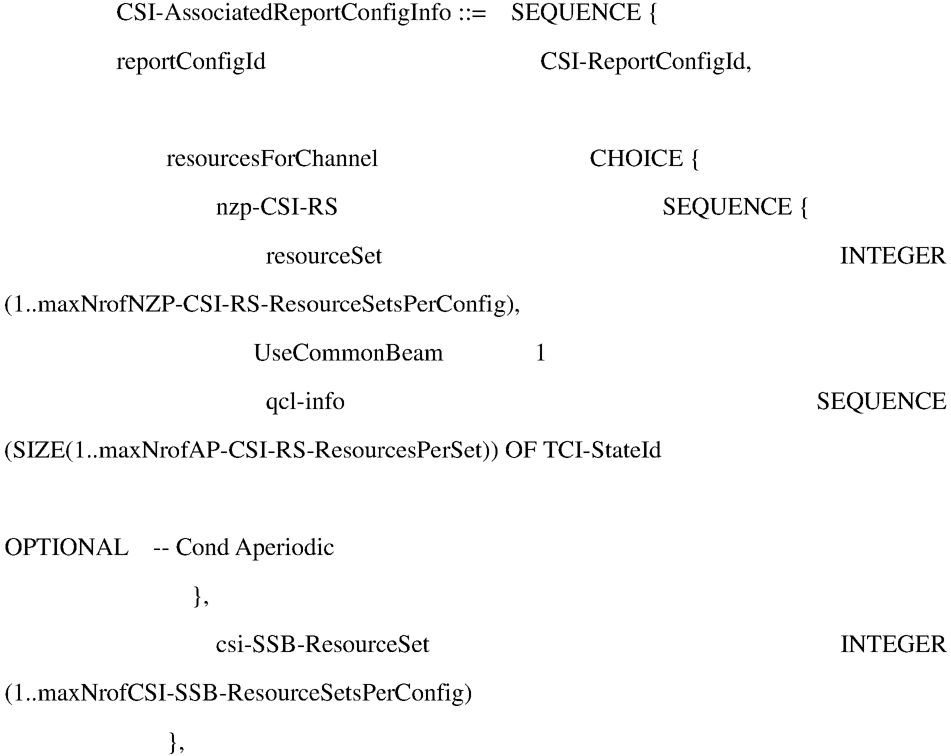

In addition, the base station configures a time offset (i.e., offset) for sending the Aperiodic CSI-RS through the RRC (NZP-CSI-RS-ResourceSet in the RRC) to indicate the terminal to receive the Aperiodic CSI-RS at the aperiodicTriggeringOffset-th (i.e., aperiodic TriggeringOffset) slot (i.e., time slot) after receiving DCI for triggering the Aperiodic CSI-RS.

Step 14, in the n-th time slot, the base station issues DCI format 1_1/1_2, in which codepoint 001 (i.e., codepoint 001) indicated in a TCI domain corresponds to two TCI states: TCI state 1 (i.e., a first TCI state) and TCI state 2 (i.e., a second TCI state). The base station configures a type-D source RS indicated in the TCI state 1 to be SSB3. At the same time, the base station issues DCI format 0_1, in which codepoint of a CSI_request domain is 000011, which indicates that a CSI-AperiodicTriggerState associating with the terminal is 3.

Step 15, the terminal receives an instruction from the base station and determines, in accordance with a resourceSet ID associated with the CSI-AperiodicTriggerState being 3, that a beam is used by a corresponding CSI-RS resource set is a receiving beam indicated by the first TCI state of the two TCI states indicated by the base station. The terminal receives and demodulates the aperiodic CSI-RS in a corresponding time slot using a receiving beam of the type-D source RS (SSB3) indicated in TCI_state1 as instructed by the base station.

Association relationships between the CSI-AperiodicTriggerState and a report setting (i.e., report setting) as well as a resource setting (i.e., resource setting) are configured through the RRC.

Specifically, it is configured as:

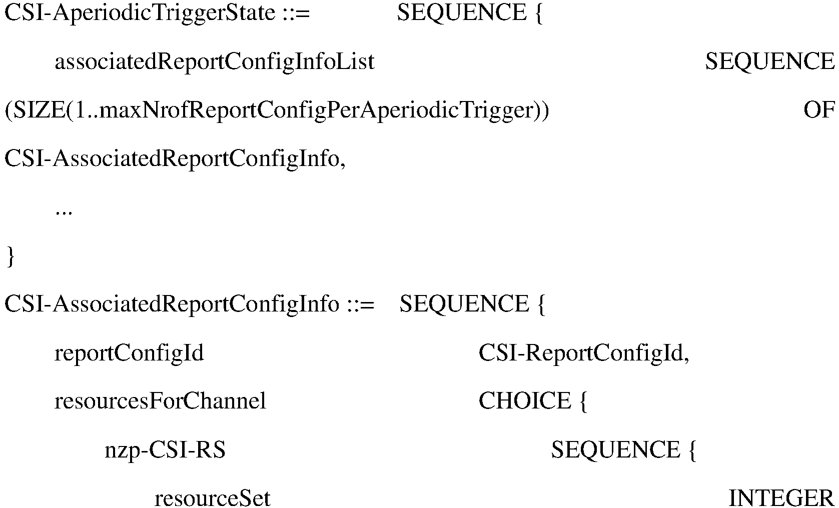

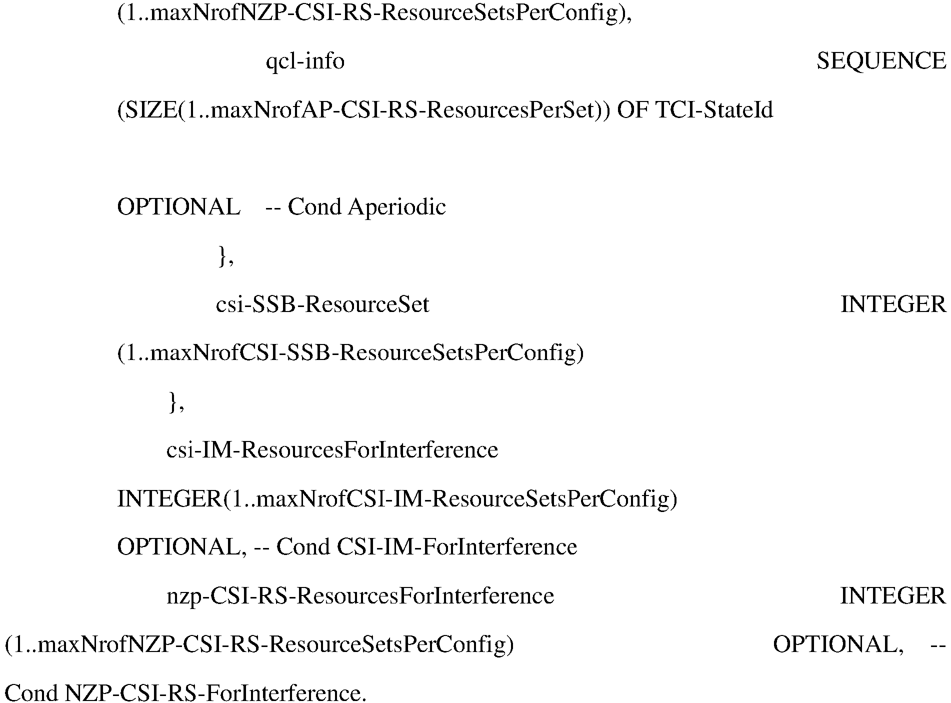

Optionally, the obtaining the beam indication information by configuring each control resource set (CORESET) through the RRC can be realized by the following steps:
step c1, if the CORESET is a first type of CORESET, determining to use a receiving beam indicated by the TCI state in the unified TCI architecture and indicating, through a media access control control element (MAC-CE) or a TCI state domain in a first downlink control information format, that one TCI state among N TCI state(s) is used for a beam transmission, where the first type of CORESET is a corresponding CORESET for a dedicated PDCCH;
step c2, the CORESET is a second type of CORESET, configuring, through high-level signaling, whether to use a receiving beam indicated by the TCI state in the unified TCI architecture; based on that the configured second type of CORESET uses the receive beam indicated by the TCI state in the unified TCI architecture, using one TCI state among N TCI state(s) in a TCI state indication in the unified TCI architecture for a beam transmission, or, indicating, through a media access control control element or a TCI state domain in a first downlink control information format, that one TCI state among N TCI state(s) is used for a beam transmission;
step c3, if the configured second type of CORESET does not use the receiving beam indicated by the TCI state in the unified TCI architecture, configuring, through a predefined manner, a TCI state for a beam transmission; where the second type of CORESET is a CORESET using/not using the TCI state indication in unified TCI architecture;
step c4, if the CORESET is the second type of CORESET/a third type of CORESET and the receiving beam indicated by the TCI state in the unified TCI architecture is not used, configuring, through a predefined manner, a TCI state for a beam transmission; where the third type of CORESET is a CORESET not using the TCI state indication in unified TCI architecture;
step c5, for a multi-transmission receiving point (mTRP) of a PDCCH, configuring any search space in two associated search spaces to use the TCI state indication in the unified TCI architecture for a beam transmission or not to use the TCI state indication in the unified TCI architecture for a beam transmission.

For example, N here is 1 or 2; if the CORESET is a first type of CORESET (e.g., CORESET A), it determines that a common beam is used and indicates to use a first TCI state or a second TCI state for a beam transmission through a multi-access access channel control resource set or a TCI state domain in a first downlink control information format. If the CORESET is a second type of CORESET/a third type of CORESET (e.g. CORESET B/C), it configures, through a high-level signaling, information for indicating that the common beam is not used and that a first TCI state or the second TCI state is used for a beam transmission; if the CORESET is a CORESET B/C and a common beam is used, then it determines to use a first TCI state or a second TCI state for a beam transmission in a same manner when the CORESET is CORESET A; and if the CORESET is a CORESET B/C and a common beam is not used, a TCI state is configured for a beam transmission in a predefined manner (i.e., Legacy). For the multi-transmission receiving point (mTRP) of PDCCH, either of the two associated search spaces uses a common beam or does not use the common beam.

Specifically, for the non-UE dedicated PDCCH, it configures whether to use the common beam Per CORESET. CORESET A: using a common beam, and indicating, through MAC-CE or DCI format 1_1/1/1_2, that a receiving beam indicated by a first TCI or a receiving beam indicated by a second TCI state is used.

CORESET B/C: configuring through a high-level signaling with "not using a common beam", "using a receiving beam indicated by a first TCI" or "using a receiving beam indicated by a second TCI state", e.g., performing configuration in a ControlResourceSet (i.e., ControlResourceSet) or a searchspace (i.e., searchspace) through the RRC; if a common beam is used, a receiving beam indicated by a first TCI state or a second TCI state is determined to be used in a similar manner as in CORESET A; and if a common beam is not used, a TCI state is configured in a legacy manner (e.g., RRC configuration + MAC-CE activation).

For multi-transmission receiving point (English: multi-Transmission Receiving Point, abbreviation: mTRP) enhancement of PDCCH, two associated searchspaces can both use a common beam or neither of them use a common beam, or one of them uses the common beam and the other one of them does not use the common beam. For example, a parameter UseCommonBeam is configured in a searchspace through the RRC to instruct the two associated searchspaces to "both use a common beam", "neither use a common beam", "a first searchspace uses a receiving beam indicated by a first TCI state", "a first searchspace uses a receiving beam indicated by a second TCI state", "a second search space uses a receiving beam indicated by a first TCI state", "a second search space uses a receiving beam indicated by a second TCI state".

Specifically, it is configured as:

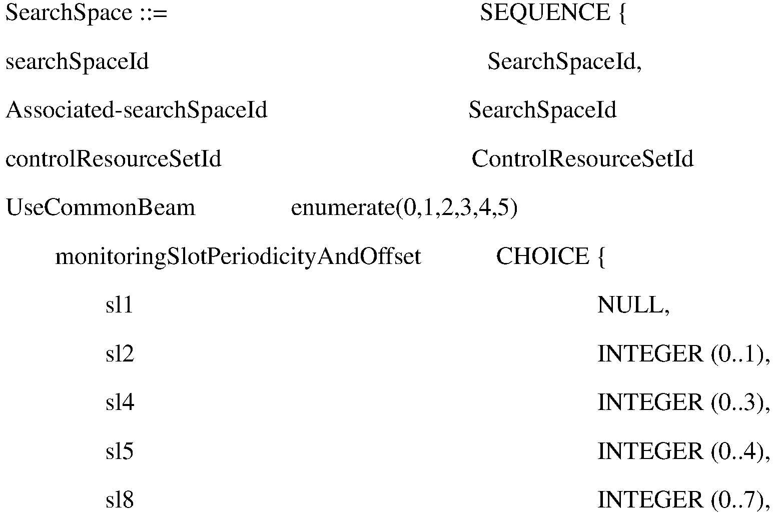

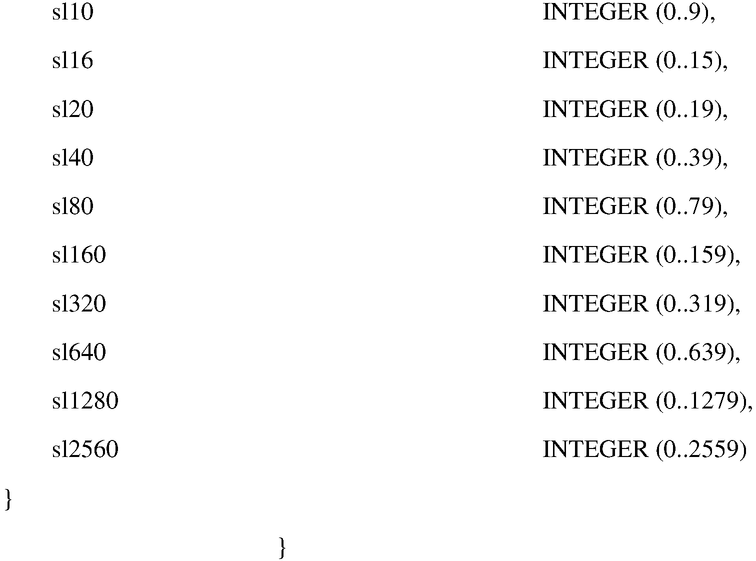

A beam indication for the non-UE dedicated PDCCH is realized in the above manner.

Exemplarily, Embodiment 2, a beam determining method is described in detail below by taking a non-UE dedicated PDCCH not using a common beam by a RRC configuration as an example.

Step 21, a base station sends CSI-RS#1, CSI-RS#2, CSI-RS#3 for downlink beam scanning.

Step 22, a terminal receives beams sent by the base station and measures the beams to obtain beam measurement results CRI1+L1-RSRP1, CRI2+L1-RSRP2, and CRI3+L1-RSRP3. The terminal compares the measurement results and finds that beam quality of L1-RSRP3 corresponding to the CSI-RS3 is the best, and the terminal feeds back to the base station beam index information CRI3+L1-RSRP3.

Step 23, the base station configures a CORESET through the RRC to inform the terminal that the corresponding PDCCH does not use a common beam (such as, UseCommonbeam 2). Specifically, it is configured as:

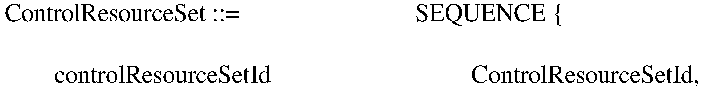

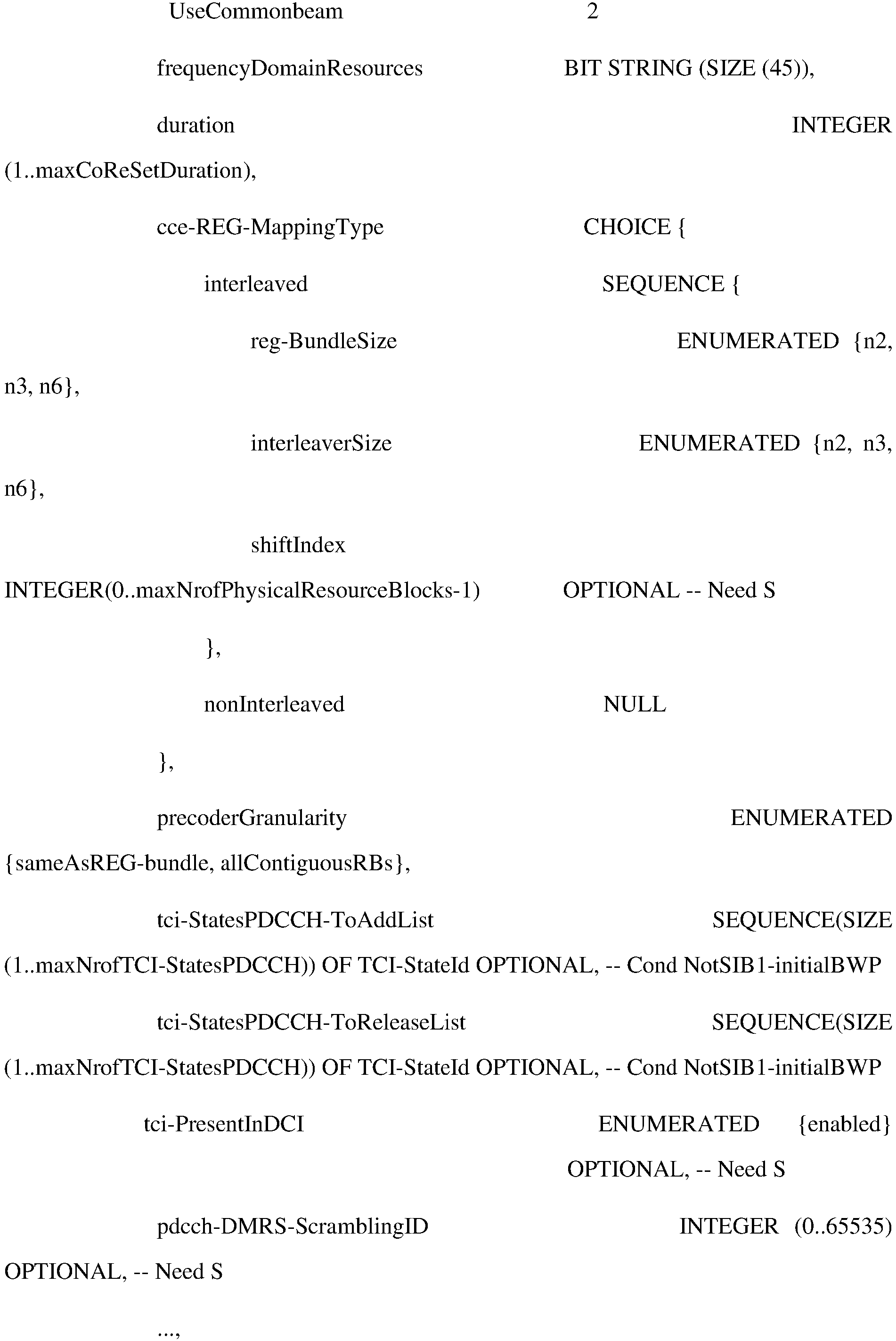

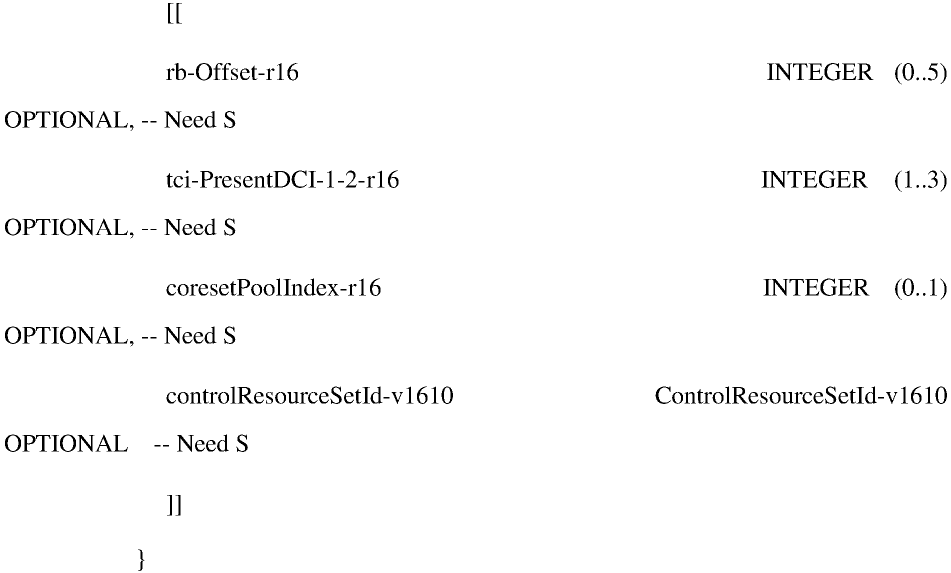

The base station simultaneously informs the terminal of a TCI state of the CORESET using the above RRC signaling.

Step 24, the base station activates the corresponding TCI state as the TCI state1 using MAC CE (i.e., MAC-CE), and a type-D source RS indicated in TCI state 1 is CSI-RS1.

Step 25, the terminal receives an instruction from the base station to receive the corresponding PDCCH using a receive beam of CSI-RS 1 indicated in TCI state 1.

Optionally, the obtaining the beam indication information through the RRC configuration can be realized by the following steps:
step d1, configuring, through the RRC, whether a receiving beam of the SRS uses a receiving beam indicated by the TCI state in the unified TCI architecture in a SRS resource or the SRS resource set;
step d2, if the receiving beam indicated by the TCI state in the unified TCI architecture is used, configuring, through the RRC, or updating, through MAC-CE, each SRS resource set to use one TCI state among indicated N TCI state(s) for a beam transmission; where all SRS resources in a same SRS resource set use a same TCI state;
step d3, if the receiving beam indicated by the TCI state in the unified TCI architecture is not used, configuring, through each SRS resource in RRC, a TCI state; where a power control parameter used by the SRS in a same SRS resource set uses a power control parameter associated with a TCI state of the SRS with the lowest index in the SRS resource set.

For example, N may be 1 or 2; if a common beam is used, it configures, through the RRC, or updating, through MAC-CE, each SRS resource set to use a receiving beam indicated by a first indicated TCI state or a second indicated TCI state. If the common beam is not used, it configures, through each SRS resource in the RRC, a TCI state thereof.

Specifically, it configures, through the RRC, whether to use a common beam, e.g., it can be configured in a SRS-Config or a SRS-ResourceSet to indicate whether to use a common beam (i.e., UseCommonBeam enumerate(0,1)). Specifically, it is configured as:

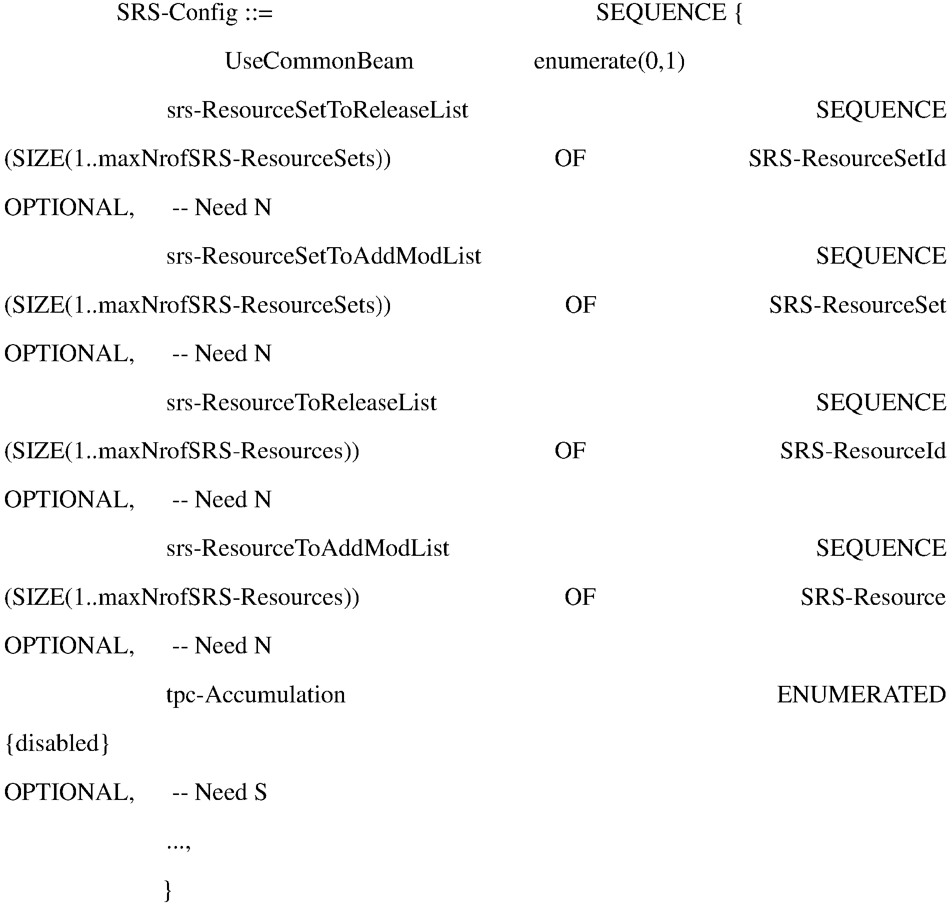

If a common beam is used, Per SRS resource set determines to use a receiving beam indicated by a first indicated TCI state or a second indicated TCI state, which can be configured through the RRC or updated through the MAC-CE. All SRS resources in a same SRS resource set use a same TCI state and are not allowed to use different TCI sates (i.e., UseCommonBeam enumerate(0,1)), which is configured as:

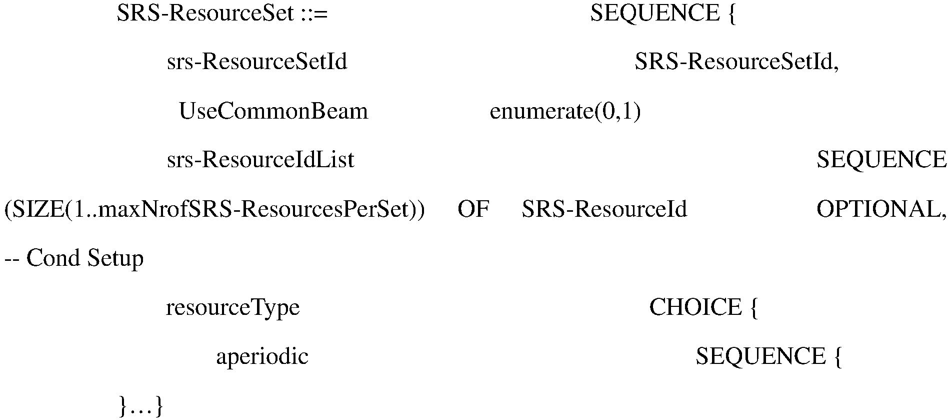

If a common beam is not used, it uses RRC signaling per SRS resource to configure its TCI sate, which is configured as:

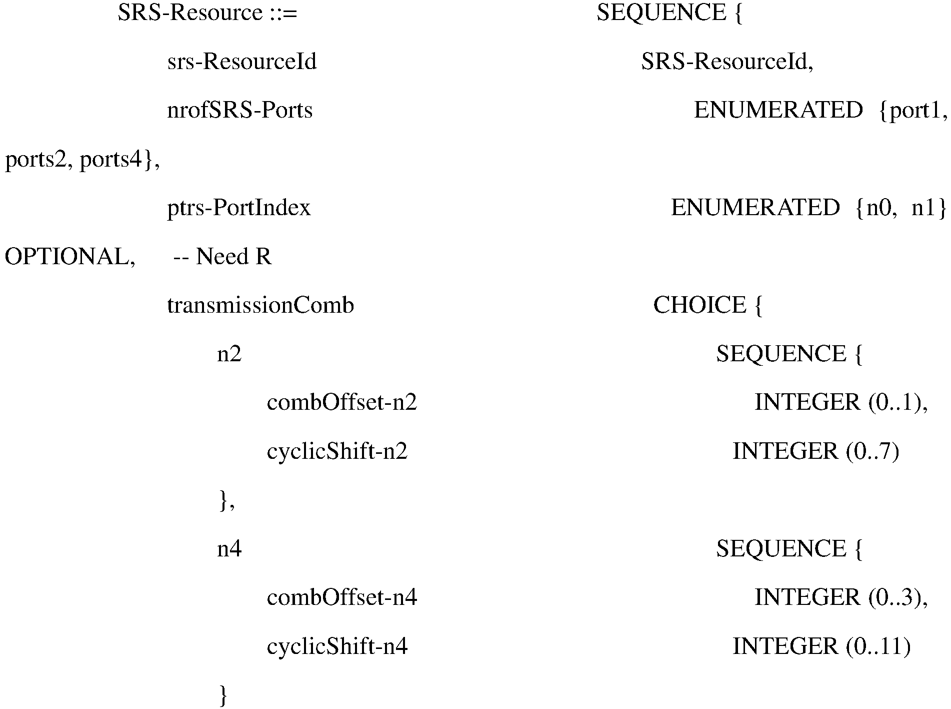

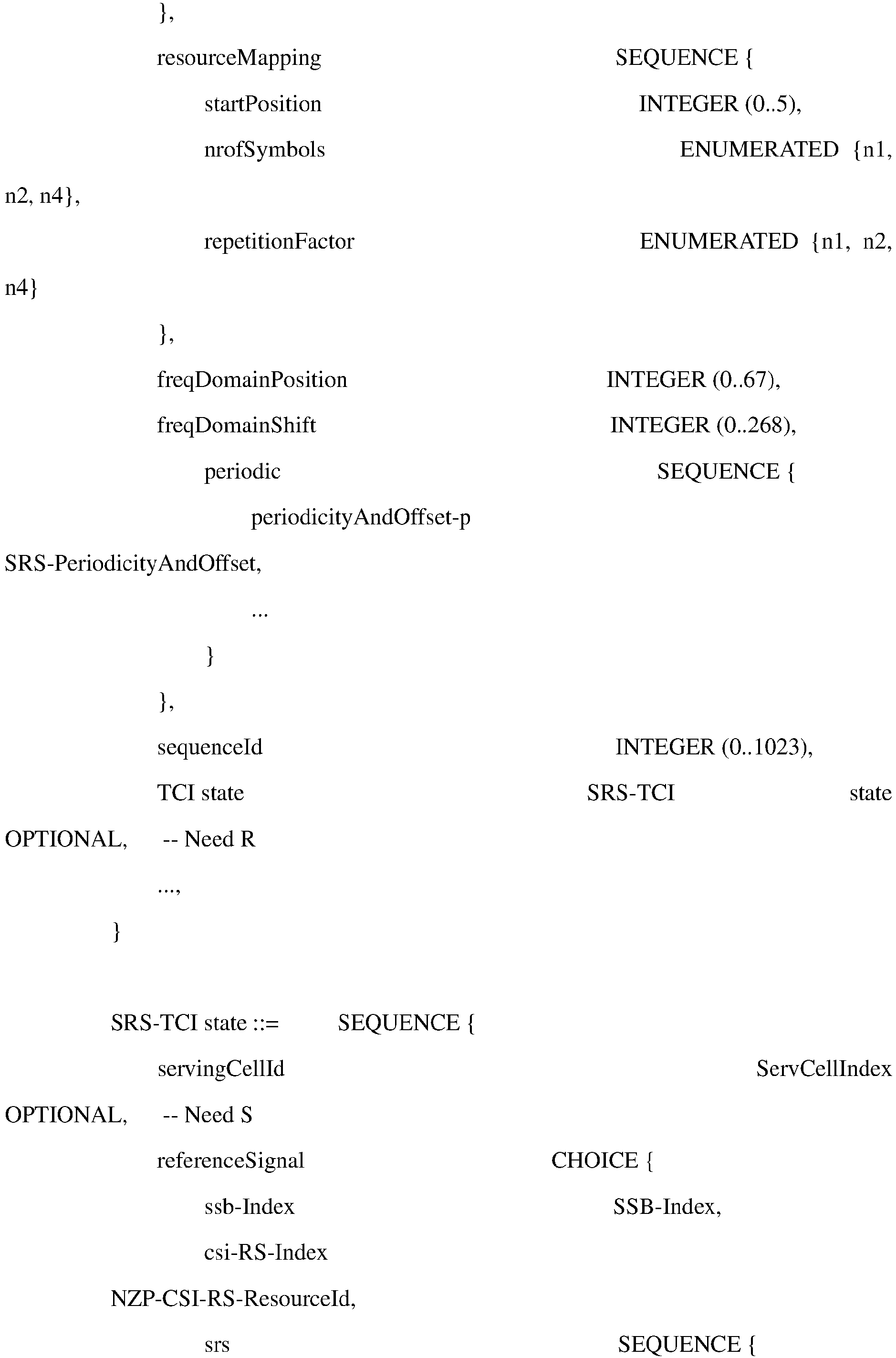

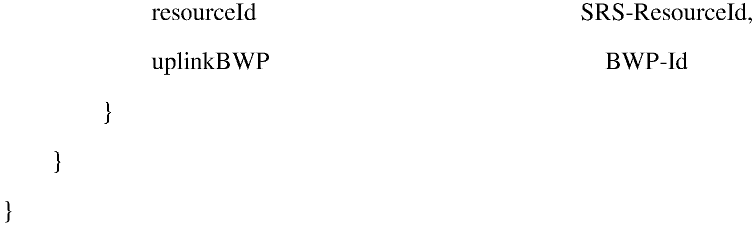

If the common beam is not used, a power control parameter used by SRS in a same SRS resource set are a power control parameter associated with a TCI state of a SRS with the lowest index in the SRS resource set (pathlossReferenceRS,alpha,p0).

The beam indication for the SPS is realized in the above way.

Exemplarily, Embodiment 3, a beam determining method is described in detail below by taking whether to use a common beam for a SRS by a RRC configuration as an example.

Step 31: a base station configures, through the RRC, a beam of the Aperiodic SRS "using a receiving beam indicated by a first TCI state of indicated TCI states", and the configured IEs are as follows:

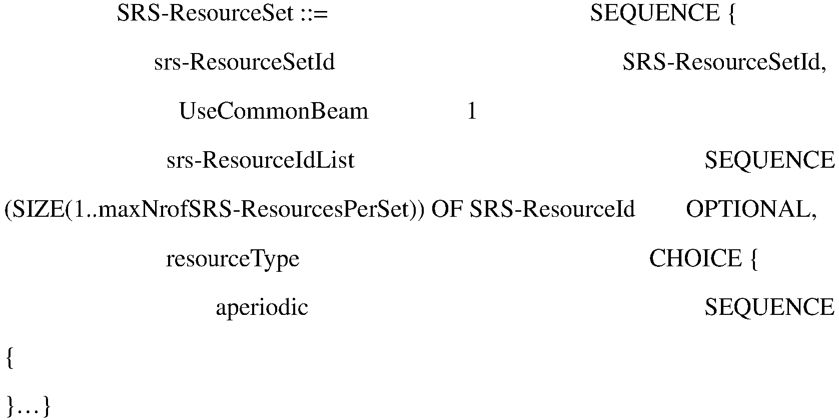

Step 32: the base station configures a trigger state (i.e., trigger state) sent by a trigger SRS resource set (i.e., trigger SRS resource set) and a time slot for sending the corresponding SRS resource set (relative to a slot offset for triggered DCI format 0_1) by the RRC. The specific configurations are as follows:

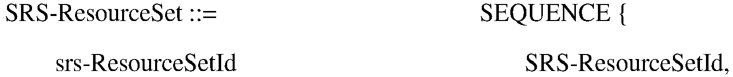

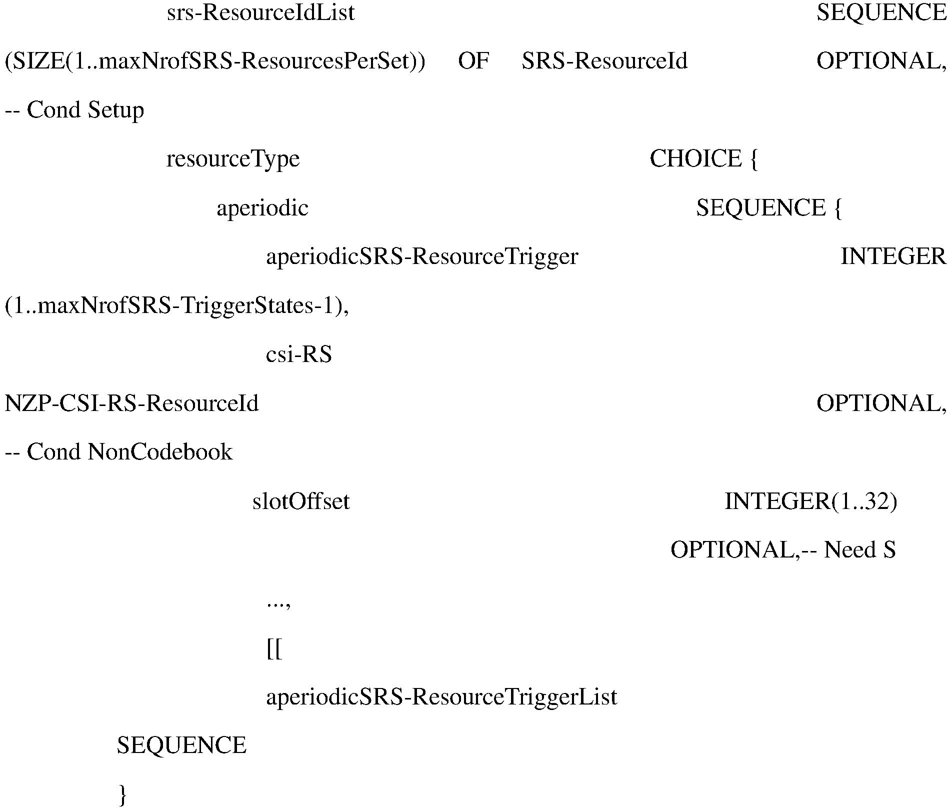

Step 33, in the n-th time slot, the base station issues DCI format 1_1/1_2, in which codepoint 001 indicated by a TCI domain corresponds to two TCI states: the TCI state1 and the TCI state2. At the same time, the base station issues DCI format 0_1, in which codepoint of a SRS request domain is 11, to indicate that the aperiodicSRS-ResourceTrigger associated with the terminal is 3.

Step 34, the terminal receives an indication from the base station, and in accordance with a SRS-ResourceSetID (i.e., the SRS resource set ID) associated with the aperiodic SRS-Resource Trigger being 3, the terminal determines a beam used by the corresponding SRS resource set to be a receiving beam of a reference signal indicated in the first TCI state of the two TCI states indicated by the base station. The terminal sends the Aperiodic SRS in a corresponding time slot using a receiving beam of a type-D source RS indicated in TCI_state1 as instructed by the base station.

Optionally, the determining, through the predefined manner, the association relationship between the SRS resource set and the TCI state in the unified TCI architecture can be achieved by the following steps:
based on an ID of the TCI state in the unified TCI architecture or configuring a configuration order of the SRS resource set, determining a first association relationship between the SRS resource set and the TCI state in the unified TCI architecture, where the first association relationship is, for the SRS resource set, an association relationship for using a receiving beam used by the TCI state in the unified TCI architecture; where a usage of the SRS is configured as a codebook/non-codebook SRS resource set; or,
determining, through a predefined manner, a second association relationship between the SRS resource set and the TCI state in the unified TCI architecture, where the second association relationship is, for the SRS resource set, an association relationship for using a receiving beam used by a control resource set in which DCI used for activating the SRS resource set is located.

Specifically, the SRS usage (i.e., usage) is configured as codebook/non-codebook (i.e., codebook/non-codebook) SRS resource set. Where an association relationship between the SRS resource set and a common beam may be a predefined association relationship based on an ID of the TCI state in the unified TCI architecture or configuring a configuration order of the SRS resource set. For example, if 2 SRS resource sets are configured, a SRS resource set with lower ID is associated with a first TCI state and a SRS resource set with higher ID is associated with a second TCI state. Another example is that 4 SRS resource sets are configured, a set with the lowest ID is associated with a first TCI state, a set with the second lowest ID is associated with a second TCI state, a set with the third lowest ID is associated with a third TCI state, and a set with the highest ID is associated with a fourth TCI state.

Alternatively, for the SRS, through the predefined manner, a second association relationship between the SRS resource set and the TCI state in the unified TCI architecture may also be determined, where the second association relationship is an association relationship for a receiving beam used by a CORESET in which DCI used for activating the SRS resource set is located, and thus, for the SRS, it can be determined, through the predefined manner, to indicate the terminal to use a receiving beam used by a control resource set in which DCI used for activating the SRS resource set is located.

A beam indication for the SPS is realized in at least two of the above manners.

Exemplarily, Embodiment 4, a beam determining method is described in detail in the following by taking determining, for the SRS, whether a common beam is used for a SRS resource set by a predefined manner as an example.

Step 41: a base station configures SRS resource set #1 and SRS resource set #2 for the terminal through the RRC.

Step 42: a system predefines a SRS resource set with lower ID to associate with a first TCI state (that is, TCI state 1), and a SRS resource set with higher ID to associate with a second TCI state (that is, TCI state 2).

Step 43: the base station indicates the TCI state 1 as well as the TCI state 2 via DCI format 1-1/1-2.

Step 44: the terminal sends the SRS resource set #1 using a receiving beam of a reference signal indicated by the TCI state 1 and sends the SRS resource set #2 using a receiving beam of a reference signal indicated by the TCI state 2 according to the indication of the base station and according to the predefined rules.

Thus, the present disclosure enables beam indications of indicated reference signals CSI-RS, SRS, and the non-UE-dedicated channels under the unified TCI architecture, especially in a mTRP scenarios, when two TCI states are indicated through the unified TCI architecture, how to select one of the TCI states as a receiving/sending beam, thereby avoiding a system performance degradation caused by a narrow beam indicated by a uniform use of a common beam for these reference signals, and further improving a system coverage.

FIG. 4 is a flowchart of a beam determining method provided by another embodiment of the present disclosure, as shown in FIG. 4, an executing entity of the beam determining method provided by the present embodiment is a terminal, and the beam determining method is applied under a unified transmission configuration indication (unified TCI) architecture. The beam determining method provided by the embodiment of the present disclosure includes the following steps.

Step 401, receiving beam indication information sent by a base station; where the beam indication information is used to indicate the terminal to receive or send the target signal or the target channel in a corresponding time slot using a receiving beam of a reference signal indicated by a target transmission configuration indication state (TCI state);

Optionally, the target signal includes: an aperiodic channel state information reference signal (Aperiodic CSI-RS), a semi-persistent channel state information reference signal (semi-persistent CSI-RS) or a sounding reference signal (SRS); and the target channel includes: a non-dedicated physical downlink control channel (PDCCH); before receiving the beam indication information sent by the base station, the method may further be realized by the steps of:
Step f1, receiving beams sent by the base station through scanning;
Step f2, measuring the beams to obtain beam measurement results;
Step f3, comparing the beam measurement results to determine a beam with best beam quality, and using index information of the beam with best beam quality as beam information;
where the beam indication information is determined by the base station based on the beam information.

Step 402, based on the beam indication information, determining whether to use a receiving beam indicated by a TCI state in a unified TCI architecture.

Specifically, the base station performs beam scanning by sending SSB/CSI-RS, the terminal receives beams sent by the base station and measures the beams to obtain beam measurement results, the terminal compares the measurement results to determine a target beam with best beam quality, the terminal feeds back beam information to the base station, such as beam index information corresponding to the target beam, the base station receives the beam information fed back by the terminal and selects the target beam, and the base station uses the selected target beam as a source reference signal for a TCI state configuration. The base station then carries out a beam indication based on the selected target beam and sends determined beam indication information to the terminal, and the terminal receives the beam indication information sent by the base station and performs a transmission in accordance with the indication.

It achieves beam indications for CSI-RS, SRS, and non-UE dedicated PDCCH under the unified TCI architecture. A base station can indicate whether to use a common beam through configuring or adopting a predefined manner, so as to determine beam indication information, and send the beam indication information to the terminal. The terminal receives the beam indication information and receives or sends the target signal or the target channel in a corresponding time slot using a receiving beam of a reference signal indicated by the one specific TCI state according to an indication.

FIG. 5 is a schematic structural diagram of a beam determining apparatus provided by an embodiment of the present disclosure. As shown in FIG. 5, the beam determining apparatus provided by the present embodiment is applied in a base station and under a unified transmission configuration indication (unified TCI) architecture, where the beam determining apparatus provided by the present embodiment includes: a transceiver 500, configured to receive and send data under control of a processor 510.

In FIG. 5, a bus architecture may include any number of interconnected buses and bridges, specifically, various circuits of one or more processors, represented by the processor 510 and a memory, represented by a memory 520 are linked together. The bus architecture may also link together other various circuits such as peripherals, voltage regulators, and power management circuits, all of which are well known in the art, and thus no more details herein. A bus interface provides an interface. The transceiver 500 may be a plurality of elements, i.e., including a transmitter and a receiver, providing units for communicating with a variety of other devices over a transmission media which include wireless channels, wired channels, fiber optic cables, and other transmission media. The processor 510 is responsible for managing the bus architecture and usual processing, and the memory 520 can store data used by the processor 510 in performing operations.

The processor 510 can be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor may also have a multi-core architecture.

In this embodiment, the memory 520 is configured to store a computer program; the transceiver 500 is configured to receive and send data under control of the processor 510; and the processor 510 is configured to read the computer program in the memory and execute the following operations:
for a target signal or a target channel, determining beam indication information; where the beam indication information is used to indicate a terminal to receive or send the target signal or the target channel in a corresponding time slot using a receiving beam of a reference signal indicated by a target transmission configuration indication state (TCI state);
sending the beam indication information to the terminal.

Optionally, the target signal includes: an aperiodic channel state information reference signal (Aperiodic CSI-RS), a semi-persistent channel state information reference signal (semi-persistent CSI-RS) or a sounding reference signal (SRS); and the target channel includes: a non-dedicated physical downlink control channel (PDCCH) or a physical uplink shared channel (PUSCH); and when determining beam indication information for the target signal or the target channel, the processor 510 is specifically configured to:
for the Aperiodic CSI-RS, obtain the beam indication information through a radio resource control (RRC) configuration; or, obtain the beam indication information through a predefined manner;
for the semi-persistent CSI-RS, obtain the beam indication information through a medium access control control element (MAC-CE) indication used for activating the semi-persistent CSI-RS;
for the SRS, obtain the beam indication information through a RRC configuration; or, determine, through a predefined manner, an association relationship between an SRS resource set and the TCI state in the unified TCI architecture, and obtain the beam indication information according to the association relationship; where the association relationship includes a first association relationship or a second association relationship;
for the non-dedicated PDCCH, for the non-dedicated PDCCH, obtain the beam indication information by configuring each control resource set (CORESET) through RRC;
for the PUSCH, the determined beam indication information indicates that a sending beam used by the terminal is a receiving beam used by a control resource set in a time slot for scheduling the PUSCH or a receiving beam used by a control resource set in a time slot for transmitting the PUSCH.

Optionally, when determining beam indication information for the target signal or the target channel if the SRS is a semi-persistent sounding reference signal (semi-persistent SRS), the processor 510 is specifically configured to:
for the semi-persistent SRS, obtain the beam indication information through the MAC-CE indication used for activating the semi-persistent SRS.

Optionally, when obtaining the beam indication information through the radio resource control (RRC) configuration, the processor 510 is specifically configured to:
configure, through the RRC, whether a receiving beam of the Aperiodic CSI-RS uses a receiving beam indicated by the TCI state in the unified TCI architecture;
if the receiving beam indicated by the TCI state in the unified TCI architecture is used, use a receiving beam indicated by one TCI state among N TCI state(s) in the TCI state(s).

Optionally, when configuring, through the RRC, whether the receiving beam of the Aperiodic CSI-RS uses the receiving beam indicated by the TCI state in the unified TCI architecture, the processor 510 is configured to:
configure, in a channel resource, through the RRC, whether the receiving beam of the Aperiodic CSI-RS uses the receiving beam indicated by the TCI state in the unified TCI architecture; or
configure, through the RRC, at least one Aperiodic CSI-RS resource set to associate with a channel state information reference signal aperiodic trigger state (CSI-AperiodicTriggerState) to obtain association information, where the association information is used to indicate that the associated at least one Aperiodic CSI-RS resource set does not use the receiving beam indicated by the TCI state in the unified TCI architecture, or to indicate that one resource set in the at least one Aperiodic CSI-RS resource set uses the receiving beam indicated by one TCI state among N TCI state(s) in the indicated TCI state(s); where one trigger state is associated with the at least one Aperiodic CSI-RS resource set.

Optionally, when obtaining beam indication information through the predefined manner, the processor 510 is configured to:
through the predefined manner, determine that the beam indication information is an indication for the terminal to use a receiving beam used by a control resource set in which downlink control information (DCI) used for activating the Aperiodic CSI-RS is located.

Optionally, when determining that the beam indication information is the indication for the terminal to use the receiving beam used by the control resource set in which the downlink control information (DCI) used for activating the Aperiodic CSI-RS is located, the processor 510 is specifically configured to:
if a number of receiving beams used by the control resource set in which DCI used for activating the Aperiodic CSI-RS is located is greater than 1, determine that the beam indication information is an indication for the terminal to use one receiving beam of a plurality of receiving beams used by the control resource set in which the DCI used for activating the Aperiodic CSI-RS is located.

Optionally, the receiving beam used by the control resource set in which the DCI used for activating the Aperiodic CSI-RS is located is a receiving beam used by the control resource set in a time slot for activating the Aperiodic CSI-RS or a receiving beam used by the control resource set in a time slot for receiving the Aperiodic CSI-RS.

Optionally, if the SRS is an aperiodic sounding reference signal (Aperiodic SRS), the beam indication information is used to indicate that the sending beam used by the terminal is a receiving beam used by a control resource set in a time slot for activating the Aperiodic SRS or a receiving beam used by a control resource set in a time slot for sending the Aperiodic SRS.

Optionally, when obtaining the beam indication information through the medium access control control element (MAC-CE) indication used for activating the semi-persistent CSI-RS, the processor 510 is specifically configured to:
indicate, through the MAC-CE used for activating the semi-persistent CSI-RS, whether a receiving beam of the semi-persistent CSI-RS uses a receiving beam indicated by the TCI state in the unified TCI architecture;
if the receiving beam indicated by the TCI state in the unified TCI architecture is used, use a receiving beam indicated by one TCI state among N TCI state(s) in the TCI state(s).

Optionally, when obtaining the beam indication information through the MAC-CE indication used for activating the semi-persistent SRS, the processor 510 is specifically configured to:
indicate, through the MAC-CE used for activating the semi-persistent SRS, whether a receiving beam of the semi-persistent SRS uses a receiving beam indicated by the TCI state in the unified TCI architecture;
based on that the receiving beam indicated by the TCI state in the unified TCI architecture is used, use a receiving beam indicated by one TCI state among N TCI state(s) in the TCI state(s).

Optionally, when obtaining the beam indication information by configuring each control resource set (CORESET) through the RRC, the processor 510 is specifically configured to:
if the CORESET is a first type of CORESET, determine to use a receiving beam indicated by the TCI state in the unified TCI architecture and indicate, through a media access control control element (MAC-CE) or a TCI state domain in a first downlink control information format, that one TCI state among N TCI state(s) is used for a beam transmission, where the first type of CORESET is a corresponding CORESET for a dedicated PDCCH;
if the CORESET is a second type of CORESET, configure, through high-level signaling, whether to use a receiving beam indicated by the TCI state in the unified TCI architecture; based on that the configured second type of CORESET uses the receive beam indicated by the TCI state in the unified TCI architecture, use one TCI state among N TCI state(s) in a TCI state indication in the unified TCI architecture for a beam transmission, or, indicate, through a media access control control element or a TCI state domain in a first downlink control information format, that one TCI state among N TCI state(s) is used for a beam transmission;
if the configured second type of CORESET does not use the receiving beam indicated by the TCI state in the unified TCI architecture, configure, through a predefined manner, a TCI state for a beam transmission; where the second type of CORESET is a CORESET using/not using the TCI state indication in unified TCI architecture;
for a multi-transmission receiving point (mTRP) of a PDCCH, configure any search space in two associated search spaces to use the TCI state indication in the unified TCI architecture for a beam transmission or not to use the TCI state indication in the unified TCI architecture for a beam transmission.

Optionally, when obtaining beam indication information through the RRC configuration, the processor 510 is specifically configured to:
configure, through the RRC, whether a receiving beam of the SRS uses a receiving beam indicated by the TCI state in the unified TCI architecture in a SRS resource or the SRS resource set;
if the receiving beam indicated by the TCI state in the unified TCI architecture is used, configure, through the RRC, or update, through MAC-CE, each SRS resource set to use one TCI state among indicated N TCI state(s) for a beam transmission; where all SRS resources in a same SRS resource set use a same TCI state;
if the receiving beam indicated by the TCI state in the unified TCI architecture is not used, configure, through each SRS resource in RRC, a TCI state thereof; where a power control parameter used by the SRS in a same SRS resource set uses a power control parameter associated with a TCI state of the SRS with the lowest index in the SRS resource set.

Optionally, when determining, through the predefined manner, the association relationship between the SRS resource set and the TCI state in the unified TCI architecture, the processor 510 is specifically configured to:
based on an ID of the TCI state in the unified TCI architecture or configuring a configuration order of the SRS resource set, determine a first association relationship between the SRS resource set and the TCI state in the unified TCI architecture, where the first association relationship is, for the SRS resource set, an association relationship for using a receiving beam used by the TCI state in the unified TCI architecture; where a usage of the SRS is configured as a codebook/non-codebook SRS resource set; or,
determine, through a predefined manner, a second association relationship between the SRS resource set and the TCI state in the unified TCI architecture, where the second association relationship is, for the SRS resource set, using a receiving beam used by a control resource set in which DCI used for activating the SRS resource set is located.

It should be noted herein that the beam determining apparatus provided in the present disclosure can implement all the method steps implemented in the above method embodiments shown in FIG. 2-FIG. 3, and can achieve the same technical effects. The same parts and beneficial effects of this embodiment as those of the method embodiments will not be specifically elaborated here.

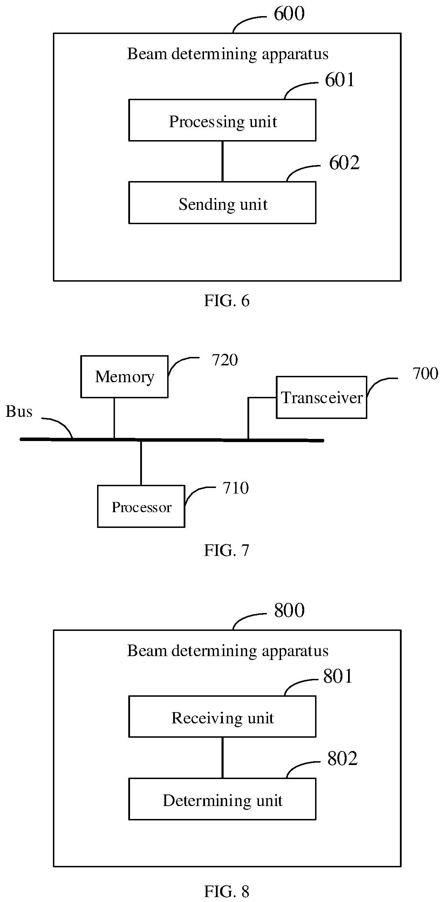

FIG. 6 is a schematic structural diagram of a beam determining apparatus provided by another embodiment of the present disclosure. As shown in FIG. 6, the beam determining apparatus provided by the present embodiment is applied in a base station and under a unified transmission configuration indication (unified TCI) architecture, where the beam determining apparatus 600 provided by this embodiment includes:
a processing unit 601, configured to, for a target signal or a target channel, determine beam indication information; where the beam indication information is used to indicate a terminal to receive or send the target signal or the target channel in a corresponding time slot using a receiving beam of a reference signal indicated by a target transmission configuration indication state (TCI state);
a sending unit 602, configured to send the beam indication information to the terminal.

Optionally, the target signal includes: an aperiodic channel state information reference signal (Aperiodic CSI-RS), a semi-persistent channel state information reference signal (semi-persistent CSI-RS) or a sounding reference signal (SRS); and the target channel includes: a non-dedicated physical downlink control channel (PDCCH); where the processing unit includes a first processing subunit, a second processing subunit, a third processing subunit, and a fourth processing subunit;
the first processing subunit is configured to, for the Aperiodic CSI-RS, obtain the beam indication information through a radio resource control (RRC) configuration; or, obtain the beam indication information through a predefined manner;
the second processing subunit is configured to, for the semi-persistent CSI-RS, obtain the beam indication information through a medium access control control element (MAC-CE) indication used for activating the semi-persistent CSI-RS;
the third processing subunit is configured to, for the SRS, obtain the beam indication information through a RRC configuration; or, determine, through a predefined manner, an association relationship between an SRS resource set and the TCI state in the unified TCI architecture, and obtain the beam indication information according to the association relationship; where the association relationship includes a first association relationship or a second association relationship;
the fourth processing subunit is configured to, for the non-dedicated PDCCH, obtain the beam indication information by configuring each control resource set (CORESET) through RRC.

Optionally, the processing unit further includes a fifth processing unit; where the fifth processing unit is configured to, if the SRS is a semi-persistent sounding reference signal (semi-persistent SRS), for the semi-persistent SRS, obtain the beam indication information through the MAC-CE indication used for activating the semi-persistent SRS.

Optionally, the first processing subunit is specifically configured to:
configure, through the RRC, whether a receiving beam of the Aperiodic CSI-RS uses a receiving beam indicated by the TCI state in the unified TCI architecture;
if the receiving beam indicated by the TCI state in the unified TCI architecture is used, use a receiving beam indicated by one TCI state among N TCI state(s) in the TCI state(s).

Optionally, the first processing subunit is specifically configured to:
configure, in a channel resource, through the RRC, whether the receiving beam of the Aperiodic CSI-RS uses the receiving beam indicated by the TCI state in the unified TCI architecture; or
configure, through the RRC, at least one Aperiodic CSI-RS resource set to associate with a channel state information reference signal aperiodic trigger state (CSI-AperiodicTriggerState) to obtain association information, where the association information is used to indicate that the associated at least one Aperiodic CSI-RS resource set does not use the receiving beam indicated by the TCI state in the unified TCI architecture, or to indicate that one resource set in the at least one Aperiodic CSI-RS resource set uses the receiving beam indicated by one TCI state among N TCI state(s) in the indicated TCI state(s); where one trigger state is associated with the at least one Aperiodic CSI-RS resource set.

Optionally, the first processing subunit is specifically configured to:
through the predefined manner, determine that the beam indication information is an indication for the terminal to use a receiving beam used by a control resource set in which downlink control information (DCI) used for activating the Aperiodic CSI-RS is located.

Optionally, the first processing subunit is specifically configured to:
if a number of receiving beams used by the control resource set in which DCI used for activating the Aperiodic CSI-RS is located is greater than 1, determine that the beam indication information is an indication for the terminal to use one receiving beam of a plurality of receiving beams used by the control resource set in which the DCI used for activating the Aperiodic CSI-RS is located. Optionally, the receiving beam used by the control resource set in which the DCI used for activating the Aperiodic CSI-RS is located is a receiving beam used by the control resource set in a time slot for activating the Aperiodic CSI-RS or a receiving beam used by the control resource set in a time slot for receiving the Aperiodic CSI-RS.

Optionally, if the SRS is an aperiodic sounding reference signal (Aperiodic SRS), the beam indication information is used to indicate that the sending beam used by the terminal is a receiving beam used by a control resource set in a time slot for activating the Aperiodic SRS or a receiving beam used by a control resource set in a time slot for sending the Aperiodic SRS.

Optionally, the target channel further includes: a physical uplink shared channel (PUSCH);
for the PUSCH, the determined beam indication information indicates that a sending beam used by the terminal is a receiving beam used by a control resource set in a time slot for scheduling the PUSCH or a receiving beam used by a control resource set in a time slot for transmitting the PUSCH.

Optionally, the second processing unit is specifically configured to:
indicate, through the MAC-CE used for activating the semi-persistent CSI-RS, whether a receiving beam of the semi-persistent CSI-RS uses a receiving beam indicated by the TCI state in the unified TCI architecture;
if the receiving beam indicated by the TCI state in the unified TCI architecture is used, use a receiving beam indicated by one TCI state among N TCI state(s) in the TCI state(s).

Optionally, the fifth processing unit is specifically configured to:
indicate, through the MAC-CE used for activating the semi-persistent SRS, whether a receiving beam of the semi-persistent SRS uses a receiving beam indicated by the TCI state in the unified TCI architecture;
if the receiving beam indicated by the TCI state in the unified TCI architecture is used, use a receiving beam indicated by one TCI state among N TCI state(s) in the TCI state(s).

Optionally, the fourth processing subunit is specifically configured to:
if the CORESET is a first type of CORESET, determine to use a receiving beam indicated by the TCI state in the unified TCI architecture and indicate, through a media access control control element (MAC-CE) or a TCI state domain in a first downlink control information format, that one TCI state among N TCI state(s) is used for a beam transmission, where the first type of CORESET is a corresponding CORESET for a dedicated PDCCH;
if the CORESET is a second type of CORESET, configure, through high-level signaling, whether to use a receiving beam indicated by the TCI state in the unified TCI architecture; based on that the configured second type of CORESET uses the receive beam indicated by the TCI state in the unified TCI architecture, use one TCI state among N TCI state(s) in a TCI state indication in the unified TCI architecture for a beam transmission, or, indicate, through a media access control control element or a TCI state domain in a first downlink control information format, that one TCI state among N TCI state(s) is used for a beam transmission;
if the configured second type of CORESET does not use the receiving beam indicated by the TCI state in the unified TCI architecture, configure, through a predefined manner, a TCI state for a beam transmission; where the second type of CORESET is a CORESET using/not using the TCI state indication in unified TCI architecture;

for a multi-transmission receiving point (mTRP) of a PDCCH, configure any search space in two associated search spaces to use the TCI state indication in the unified TCI architecture for a beam transmission or not to use the TCI state indication in the unified TCI architecture for a beam transmission.

Optionally, the third processing subunit is specifically configured to:
configure, through the RRC, whether a receiving beam of the SRS uses a receiving beam indicated by the TCI state in the unified TCI architecture in a SRS resource or the SRS resource set;
if the receiving beam indicated by the TCI state in the unified TCI architecture is used, configure, through the RRC, or update, through MAC-CE, each SRS resource set to use one TCI state among indicated N TCI state(s) for a beam transmission; where all SRS resources in a same SRS resource set use a same TCI state;
if the receiving beam indicated by the TCI state in the unified TCI architecture is not used, configure, through each SRS resource in RRC, a TCI state thereof; where a power control parameter used by the SRS in a same SRS resource set uses a power control parameter associated with a TCI state of the SRS with the lowest index in the SRS resource set.

Optionally, the third processing subunit is specifically configured to:
based on an ID of the TCI state in the unified TCI architecture or configuring a configuration order of the SRS resource set, determine a first association relationship between the SRS resource set and the TCI state in the unified TCI architecture, where the first association relationship is, for the SRS resource set, an association relationship for using a receiving beam used by the TCI state in the unified TCI architecture; where a usage of the SRS is configured as a codebook/non-codebook SRS resource set; or,
determine, through a predefined manner, a second association relationship between the SRS resource set and the TCI state in the unified TCI architecture, where the second association relationship is, for the SRS resource set, an association relationship for using a receiving beam used by a control resource set in which DCI used for activating the SRS resource set is located.

It should be noted herein that the beam determining apparatus provided in the present disclosure can implement all the method steps implemented in the above method embodiments shown in FIG. 2-FIG. 3, and can achieve the same technical effects. The same parts and beneficial effects of this embodiment as those of the method embodiments will not be specifically elaborated here.

FIG. 7 is a schematic structural diagram of a beam determining apparatus provided by yet another embodiment of the present disclosure. As shown in FIG. 7, the beam determining apparatus provided by the present embodiment is applied in a terminal and under a unified transmission configuration indication (unified TCI) architecture, where the beam determining apparatus provided by this embodiment includes: a transceiver 700, configured to receive and send data under control of a processor 710.

In FIG. 7, a bus architecture may include any number of interconnected buses and bridges, specifically, various circuits of one or more processors, represented by the processor 710 and a memory, represented by a memory 720 are linked together. The bus architecture may also link together other various circuits such as peripherals, voltage regulators, and power management circuits, all of which are well known in the art, and thus no more details herein. A bus interface provides an interface. The transceiver 700 may be a plurality of elements, i.e., including a transmitter and a receiver, providing units for communicating with a variety of other devices over a transmission media, which include wireless channels, wired channels, fiber optic cables, and other transmission media. The processor 710 is responsible for managing the bus architecture and usual processing, and the memory 720 can store data used by the processor 710 in performing operations.

The processor 710 can be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor may also have a multi-core architecture.

In this embodiment, the memory 720 is configured to store a computer program; the transceiver 700 is configured to receive and send data under control of the processor; and the processor 710 is configured to read the computer program in the memory and execute the following operations:
receiving beam indication information sent by a base station; where the beam indication information is used to indicate the terminal to receive or send the target signal or the target channel in a corresponding time slot using a receiving beam of a reference signal indicated by a target transmission configuration indication state (TCI state);
based on the beam indication information, determining whether to use a receiving beam indicated by a TCI state in a unified TCI architecture.

Optionally, the target signal includes: an aperiodic channel state information reference signal (Aperiodic CSI-RS), a semi-persistent channel state information reference signal (semi-persistent CSI-RS) or a sounding reference signal (SRS); and the target channel includes: a non-dedicated physical downlink control channel (PDCCH); and the processor 710 is further configured to execute the following operations:
receive beams sent by the base station through scanning, before receiving the beam indication information sent by the base station;
measure the beams to obtain beam measurement results;
compare the beam measurement results to determine a beam with best beam quality, and using index information of the beam with best beam quality as beam information;
where the beam indication information is determined by the base station based on the beam information.

It should be noted herein that the beam determining apparatus provided in the present disclosure can implement all the method steps implemented in the above method embodiments shown in FIG. 2 and FIG. 4, and can achieve the same technical effects. The same parts and beneficial effects of this embodiment as those of the method embodiments will not be specifically elaborated here.

FIG. 8 is a schematic structural diagram of a beam determining apparatus provided by yet still another embodiment of the present disclosure. As shown in FIG. 8, the beam determining apparatus provided by the present embodiment is applied in a terminal and under a unified transmission configuration indication (unified TCI) architecture, where the beam determining apparatus 800 provided by this embodiment includes:
a receiving unit 801, configured to receive beam indication information sent by a base station; where the beam indication information is used to indicate the terminal to receive or send a target signal or a target channel in a corresponding time slot using a receiving beam of a reference signal indicated by a target transmission configuration indication state (TCI state);
a determining unit 802, configured to, based on the beam indication information, determine whether to use a receiving beam indicated by a TCI state in a unified TCI architecture.

Optionally, the target signal includes: an aperiodic channel state information reference signal (Aperiodic CSI-RS), a semi-persistent channel state information reference signal (semi-persistent CSI-RS) or a sounding reference signal (SRS); and the target channel includes: a non-dedicated physical downlink control channel (PDCCH); where the beam determining apparatus 800 further includes a processing unit, configured to:
before receiving the beam indication information sent by the base station, receive beams sent by the base station through scanning;
measure the beams to obtain beam measurement results;
compare the beam measurement results to determine a beam with best beam quality, and using index information of the beam with best beam quality as beam information;
where the beam indication information is determined by the base station based on the beam information.

It should be noted herein that the beam determining apparatus provided in the present disclosure can implement all the method steps implemented in the above method embodiments shown in FIG. 2 and FIG. 4, and can achieve the same technical effects. The same parts and beneficial effects of this embodiment as those of the method embodiments will not be specifically elaborated here.

It should be noted that the division of the units in the embodiment of the present disclosure is schematic and only serves as a logical functional division. In actual implementation, there may be other division methods. In addition, in various embodiments of the present disclosure, each functional unit can be integrated into a single processing unit, each unit can physically exist, separately, or two or more units can be integrated into one unit. The aforementioned integrated unit may be realized in a form of hardware or a form of a software functional unit.

If the aforementioned integrated unit is realized in the software function unit and sold or used as an independent product, it can be stored in a processor-readable storage medium. Based on this understanding, the technical solution of the present disclosure is essentially or part of the contribution to the prior art or all or part of the technical solution can be embodied in the form of a software product, and the computer software product is stored in a storage medium, including several instructions to enable a computer device (which may be a personal computer, a server, or a network device, etc.) or a processor (processor) to execute all or part of the steps of the methods in various embodiments of the present disclosure. The aforementioned storage medium includes: an U disk, a mobile hard disk, a read-only memory (Read-Only Memory, ROM), a random access memory (Random Access Memory, RAM), a magnetic disk or an optical disk and other various media that can store program codes.

An embodiment of the present disclosure also provides a processor-readable storage medium, where the processor-readable storage medium stores a computer program, and the computer program is configured to enable a processor to execute any of the method embodiments described above.

The processor-readable storage medium may be any available medium or data storage device that the processor can access, including but not limited to a magnetic memory (such as a floppy disk, a hard disk, a magnetic tape, a magneto-optical disk (MO), etc.), an optical memory (such as a CD, a DVD, a BD, a HVD, etc.), and a semiconductor memory (such as a ROM, an EPROM, an EEPROM, a non-volatile memory (NAND FLASH), a solid state disk (SSD)), etc.

Those skilled in the art shall understand that, the embodiments of the present disclosure can be provided as a method, a system or a computer program product. Therefore, the present disclosure may adopt the form of an entirely hardware embodiment, an entirely software embodiment or an embodiment combining software and hardware. Furthermore, the present disclosure may adopt the form of a computer program product implemented on one or more computer-usable storage media (including but not limited to a disk memory, an optical memory, and the like) containing computer-usable program codes.

The present disclosure is described with reference to the flowcharts and/or block diagrams of the methods, the devices (systems) and the computer program products according to the embodiments of the present disclosure. It should be understood that, each flowchart and/or block in the flowcharts and/or block diagrams and combinations of flows and/or blocks in the flowcharts and/or block diagrams can be implemented by computer-executable instructions. The computer-executable instructions may be provided to a processor of a general-purpose computer, a special-purpose computer, an embedded processor or other programmable data processing devices to produce a machine, which enables instructions executed by a processor of a computer or other programmable data processing devices to generate an apparatus for implementing functions specified in one or more processes in the flowcharts and/or one or more blocks in the block diagrams.

These processor-executable instructions may also be stored in a processor-readable memory that can direct a computer or other programmable data processing devices to operate in a particular manner, so that the instructions stored in the processor-readable memory generate an article of manufacture including an instruction apparatus. The instruction apparatus implements functions specified in one or more processes in the flowcharts and/or one or more blocks in the block diagrams.

These processor-executable instructions may also be loaded into a computer or other programmable data processing devices, so that a series of operational steps are performed on the computer or other programmable devices to generate computer-implemented processing. Thus, the instructions executed on the computer or other programmable devices provide steps for implementing the functions specified in one or more processes in the flowcharts and/or one or more blocks in the block diagrams.

Obviously, those skilled in the art can make various modifications and variations to the present disclosure without departing from the spirit and scope of the present disclosure. As such, if these modifications and variations of the present disclosure belong to the scope of the claims of the present disclosure and their equivalents, the present disclosure is intended to include these modifications and variations.

## Claims

1. A beam determining method, applied to a base station and under a unified transmission configuration indication (unified TCI) architecture, comprising:
for a target signal or a target channel, determining beam indication information; wherein the beam indication information is used to indicate a terminal to receive or send the target signal or the target channel in a corresponding time slot using a receiving beam of a reference signal indicated by a target transmission configuration indication state (TCI state);
sending the beam indication information to the terminal.

2. The method according to claim 1, wherein the target signal comprises: an aperiodic channel state information reference signal (Aperiodic CSI-RS), a semi-persistent channel state information reference signal (semi-persistent CSI-RS) or a sounding reference signal (SRS); and the target channel comprises: a non-dedicated physical downlink control channel (PDCCH) or a physical uplink shared channel (PUSCH); wherein for the target signal or the target channel, the determining the beam indication information comprises:
for the Aperiodic CSI-RS, obtaining the beam indication information through a radio resource control (RRC) configuration; or, obtaining the beam indication information through a predefined manner;
for the semi-persistent CSI-RS, obtaining the beam indication information through a medium access control control element (MAC-CE) indication used for activating the semi-persistent CSI-RS;
for the SRS, obtaining the beam indication information through the RRC configuration; or, determining, through a predefined manner, an association relationship between an SRS resource set and the TCI state in the unified TCI architecture, and obtaining the beam indication information according to the association relationship; wherein the association relationship comprises a first association relationship or a second association relationship;
for the non-dedicated PDCCH, obtaining the beam indication information by configuring each control resource set (CORESET) through RRC;
for the PUSCH, obtaining the beam indication information; wherein the beam indication information is used to indicate that a sending beam used by the terminal is a receiving beam used by a control resource set in a time slot for scheduling the PUSCH or a receiving beam used by a control resource set in a time slot for transmitting the PUSCH.

3. The method according to claim 2, wherein based on that the SRS is a semi-persistent sounding reference signal (semi-persistent SRS), for the target signal or the target channel, the determining the beam indication information comprises:
for the semi-persistent SRS, obtaining the beam indication information through the MAC-CE indication used for activating the semi-persistent SRS.

4. The method according to claim 2, wherein the obtaining the beam indication information through the radio resource control (RRC) configuration comprises:
configuring, through the RRC, whether a receiving beam of the Aperiodic CSI-RS uses a receiving beam indicated by the TCI state in the unified TCI architecture;
based on that the receiving beam indicated by the TCI state in the unified TCI architecture is used, using a receiving beam indicated by one TCI state among N TCI state(s) in the TCI state(s).

5. The method according to claim 4, wherein the configuring, through the RRC, whether the receiving beam of the Aperiodic CSI-RS uses the receiving beam indicated by the TCI state in the unified TCI architecture comprises:
configuring, in a channel resource, through the RRC, whether the receiving beam of the Aperiodic CSI-RS uses the receiving beam indicated by the TCI state in the unified TCI architecture; or
configuring, through the RRC, at least one Aperiodic CSI-RS resource set to associate with a channel state information reference signal aperiodic trigger state (CSI-AperiodicTriggerState) to obtain association information, wherein the association information is used to indicate that associated at least one Aperiodic CSI-RS resource set does not use the receiving beam indicated by the TCI state in the unified TCI architecture, or to indicate that one resource set in the at least one Aperiodic CSI-RS resource set uses the receiving beam indicated by one TCI state among N TCI state(s) in the indicated TCI state(s); wherein one trigger state is associated with the at least one Aperiodic CSI-RS resource set.

6. The method according to claim 2, wherein the obtaining the beam indication information through the predefined manner comprises:
through the predefined manner, determining that the beam indication information is an indication for the terminal to use a receiving beam used by a control resource set in which downlink control information (DCI) used for activating the Aperiodic CSI-RS is located.

7. The method according to claim 6, wherein the determining that the beam indication information is the indication for the terminal to use the receiving beam used by the control resource set in which the downlink control information (DCI) used for activating the Aperiodic CSI-RS is located comprises:
based on that a number of receiving beams used by the control resource set in which DCI used for activating the Aperiodic CSI-RS is located is greater than 1, determining that the beam indication information is an indication for the terminal to use one receiving beam of a plurality of receiving beams used by the control resource set in which the DCI used for activating the Aperiodic CSI-RS is located.

8. The method according to claim 7, wherein the receiving beam used by the control resource set in which the DCI used for activating the Aperiodic CSI-RS is located is a receiving beam used by the control resource set in a time slot for activating the Aperiodic CSI-RS or a receiving beam used by the control resource set in a time slot for receiving the Aperiodic CSI-RS.

9. The method according to claim 2, wherein based on that the SRS is an aperiodic sounding reference signal (Aperiodic SRS), the beam indication information is used to indicate that the sending beam used by the terminal is a receiving beam used by a control resource set in a time slot for activating the Aperiodic SRS or a receiving beam used by a control resource set in a time slot for sending the Aperiodic SRS.

10. The method according to claim 2, wherein the obtaining the beam indication information through the medium access control control element (MAC-CE) indication used for activating the semi-persistent CSI-RS comprises:
indicating, through the MAC-CE used for activating the semi-persistent CSI-RS, whether a receiving beam of the semi-persistent CSI-RS uses a receiving beam indicated by the TCI state in the unified TCI architecture;
based on that the receiving beam indicated by the TCI state in the unified TCI architecture is used, using a receiving beam indicated by one TCI state among N TCI state(s) in the TCI state(s).

11. The method according to claim 3, wherein the obtaining the beam indication information through the MAC-CE indication used for activating the semi-persistent SRS comprises:
indicating, through the MAC-CE used for activating the semi-persistent SRS, whether a receiving beam of the semi-persistent SRS uses a receiving beam indicated by the TCI state in the unified TCI architecture;
based on that the receiving beam indicated by the TCI state in the unified TCI architecture is used, using a receiving beam indicated by one TCI state among N TCI state(s) in the TCI state(s).

12. The method according to claim 2, wherein the obtaining the beam indication information by configuring each control resource set (CORESET) through the RRC comprises:
based on that the CORESET is a first type of CORESET, determining to use a receiving beam indicated by the TCI state in the unified TCI architecture and indicating, through a media access control control element (MAC-CE) or a TCI state domain in a first downlink control information format, that one TCI state among N TCI state(s) is used for a beam transmission, wherein the first type of CORESET is a corresponding CORESET for a dedicated PDCCH;
based on that the CORESET is a second type of CORESET, configuring, through high-level signaling, whether to use a receiving beam indicated by the TCI state in the unified TCI architecture; based on that the configured second type of CORESET uses the receive beam indicated by the TCI state in the unified TCI architecture, using one TCI state among N TCI state(s) in a TCI state indication in the unified TCI architecture for a beam transmission, or, indicating, through a media access control control element or a TCI state domain in a first downlink control information format, that one TCI state among N TCI state(s) is used for a beam transmission; based on that the configured second type of CORESET does not use the receiving beam indicated by the TCI state in the unified TCI architecture, configuring, through a predefined manner, a TCI state for a beam transmission; wherein the second type of CORESET is a CORESET using/not using the TCI state indication in unified TCI architecture;
for a multi-transmission receiving point (mTRP) of a PDCCH, configuring any search space in two associated search spaces to use the TCI state indication in the unified TCI architecture for a beam transmission or not to use the TCI state indication in the unified TCI architecture for a beam transmission.

13. The method according to claim 2, wherein the obtaining the beam indication information through the RRC configuration comprises:
configuring, through the RRC, whether a receiving beam of the SRS uses a receiving beam indicated by the TCI state in the unified TCI architecture in a SRS resource or the SRS resource set;
based on that the receiving beam indicated by the TCI state in the unified TCI architecture is used, configuring, through the RRC, or updating, through MAC-CE, each SRS resource set to use one TCI state among indicated N TCI state(s) for a beam transmission; wherein all SRS resources in a same SRS resource set use a same TCI state;
based on that the receiving beam indicated by the TCI state in the unified TCI architecture is not used, configuring, through each SRS resource in RRC, a TCI state; wherein a power control parameter used by the SRS in a same SRS resource set uses a power control parameter associated with a TCI state of the SRS with the lowest index in the SRS resource set.

14. The method according to claim 2, wherein the determining, through the predefined manner, the association relationship between the SRS resource set and the TCI state in the unified TCI architecture comprises:
based on an ID of the TCI state in the unified TCI architecture or configuring a configuration order of the SRS resource set, determining a first association relationship between the SRS resource set and the TCI state in the unified TCI architecture, wherein the first association relationship is, for the SRS resource set, an association relationship for using a receiving beam used by the TCI state in the unified TCI architecture; wherein a usage of the SRS is configured as a codebook/non-codebook SRS resource set; or,
determining, through a predefined manner, a second association relationship between the SRS resource set and the TCI state in the unified TCI architecture, wherein the second association relationship is, for the SRS resource set, an association relationship for using a receiving beam used by a control resource set in which DCI used for activating the SRS resource set is located.

15. A beam determining method, applied to a terminal, comprising:
receiving beam indication information sent by a base station; wherein the beam indication information is used to indicate the terminal to receive or send a target signal or a target channel in a corresponding time slot using a receiving beam of a reference signal indicated by a target transmission configuration indication state (TCI state);
based on the beam indication information, determining whether to use a receiving beam indicated by a TCI state in a unified TCI architecture.

16. The method according to claim 15, wherein the target signal comprises: an aperiodic channel state information reference signal (Aperiodic CSI-RS), a semi-persistent channel state information reference signal (semi-persistent CSI-RS) or a sounding reference signal (SRS); and the target channel comprises: a non-dedicated physical downlink control channel (PDCCH) or a physical uplink shared channel (PUSCH); before receiving the beam indication information sent by the base station, the method further comprises:
receiving beams sent by the base station through scanning;
measuring the beams to obtain beam measurement results;
comparing the beam measurement results to determine a beam with best beam quality, and using index information of the beam with best beam quality as beam information;
wherein the beam indication information is determined by the base station based on the beam information.

17. A beam determining apparatus, applied in a base station and under a unified transmission configuration indication (unified TCI) architecture, comprising: a memory, a transceiver, a processor;
the memory is configured to store a computer program;
the transceiver is configured to receive and send data under control of a processor;
the processor is configured to read the computer program in the memory and execute the following operations:
for a target signal or a target channel, determining beam indication information; wherein the beam indication information is used to indicate a terminal to receive or send the target signal or the target channel in a corresponding time slot using a receiving beam of a reference signal indicated by a target transmission configuration indication state (TCI state);
sending the beam indication information to the terminal.

18. A beam determining apparatus, wherein the apparatus is applied in a terminal, and the apparatus comprises: a memory, a transceiver, a processor;
the memory is configured to store a computer program;
the transceiver is configured to receive and send data under control of a processor;
the processor is configured to read the computer program in the memory and execute the following operations:
receiving beam indication information sent by a base station; wherein the beam indication information is used to indicate the terminal to receive or send a target signal or a target channel in a corresponding time slot using a receiving beam of a reference signal indicated by a target transmission configuration indication state (TCI state);
based on the beam indication information, determining whether to use a receiving beam indicated by a TCI state in a unified TCI architecture.

19. A beam determining apparatus, applied in a base station and under a unified transmission configuration indication (unified TCI) architecture, comprising:
a processing unit, configured to, for a target signal or a target channel, determine beam indication information; wherein the beam indication information is used to indicate a terminal to receive or send the target signal or the target channel in a corresponding time slot using a receiving beam of a reference signal indicated by a target transmission configuration indication state (TCI state);
a sending unit, configured to send the beam indication information to the terminal.

20. The apparatus according to claim 19, wherein the target signal comprises: an aperiodic channel state information reference signal (Aperiodic CSI-RS), a semi-persistent channel state information reference signal (semi-persistent CSI-RS) or a sounding reference signal (SRS); and the target channel comprises: a non-dedicated physical downlink control channel (PDCCH) or a physical uplink shared channel (PUSCH); wherein the processing unit comprises a first processing subunit, a second processing subunit, a third processing subunit, and a fourth processing subunit;
the first processing subunit is configured to, for the Aperiodic CSI-RS, obtain the beam indication information through a radio resource control (RRC) configuration; or, obtain the beam indication information through a predefined manner;
the second processing subunit is configured to, for the semi-persistent CSI-RS, obtain the beam indication information through a medium access control control element (MAC-CE) indication used for activating the semi-persistent CSI-RS;
the third processing subunit is configured to, for the SRS, obtain the beam indication information through a RRC configuration; or, determine, through a predefined manner, an association relationship between an SRS resource set and the TCI state in the unified TCI architecture, and obtain the beam indication information according to the association relationship; wherein the association relationship comprises a first association relationship or a second association relationship;
the fourth processing subunit is configured to, for the non-dedicated PDCCH, obtain the beam indication information by configuring each control resource set (CORESET) through RRC;
wherein for the PUSCH, the beam indication information is obtained; wherein the beam indication information is used to indicate that a sending beam used by the terminal is a receiving beam used by a control resource set in a time slot for scheduling the PUSCH or a receiving beam used by a control resource set in a time slot for transmitting the PUSCH.

21. The apparatus according to claim 20, wherein the processing unit further comprises a fifth processing unit; and the fifth processing unit is configured to, based on that the SRS is a semi-persistent sounding reference signal (semi-persistent SRS), for the semi-persistent SRS, obtain the beam indication information through the MAC-CE indication used for activating the semi-persistent SRS.

22. The apparatus according to claim 20, wherein the first processing subunit is specifically configured to:
configure, through the RRC, whether a receiving beam of the Aperiodic CSI-RS uses a receiving beam indicated by the TCI state in the unified TCI architecture;
based on that the receiving beam indicated by the TCI state in the unified TCI architecture is used, use a receiving beam indicated by one TCI state among N TCI state(s) in the TCI state(s).

23. The apparatus according to claim 22, wherein the first processing subunit is specifically configured to:
configure, in a channel resource, through the RRC, whether the receiving beam of the Aperiodic CSI-RS uses the receiving beam indicated by the TCI state in the unified TCI architecture; or
configure, through the RRC, at least one Aperiodic CSI-RS resource set to associate with a channel state information reference signal aperiodic trigger state (CSI-AperiodicTriggerState) to obtain association information, wherein the association information is used to indicate that the associated at least one Aperiodic CSI-RS resource set does not use the receiving beam indicated by the TCI state in the unified TCI architecture, or to indicate that one resource set in the at least one Aperiodic CSI-RS resource set uses the receiving beam indicated by one TCI state among N TCI state(s) in the indicated TCI state(s); wherein one trigger state is associated with the at least one Aperiodic CSI-RS resource set.

24. The apparatus according to claim 20, wherein the first processing subunit is specifically configured to:
through the predefined manner, determine that the beam indication information is an indication for the terminal to use a receiving beam used by a control resource set in which downlink control information (DCI) used for activating the Aperiodic CSI-RS is located.

25. The apparatus according to claim 24, wherein the first processing subunit is specifically configured to:
based on that a number of receiving beams used by the control resource set in which DCI used for activating the Aperiodic CSI-RS is located is greater than 1, determine that the beam indication information is an indication for the terminal to use one receiving beam of a plurality of receiving beams used by the control resource set in which the DCI used for activating the Aperiodic CSI-RS is located.

26. The apparatus according to claim 25, wherein the receiving beam used by the control resource set in which the DCI used for activating the Aperiodic CSI-RS is located is a receiving beam used by the control resource set in a time slot for activating the Aperiodic CSI-RS or a receiving beam used by the control resource set in a time slot for receiving the Aperiodic CSI-RS.

27. The apparatus according to claim 20, wherein based on that the SRS is an aperiodic sounding reference signal (Aperiodic SRS), the beam indication information is used to indicate that the sending beam used by the terminal is a receiving beam used by a control resource set in a time slot for activating the Aperiodic SRS or a receiving beam used by a control resource set in a time slot for sending the Aperiodic SRS.

28. The apparatus according to claim 20, wherein the second processing unit is specifically configured to:
indicate, through the MAC-CE used for activating the semi-persistent CSI-RS, whether a receiving beam of the semi-persistent CSI-RS uses a receiving beam indicated by the TCI state in the unified TCI architecture;
based on that the receiving beam indicated by the TCI state in the unified TCI architecture is used, use a receiving beam indicated by one TCI state among N TCI state(s) in the TCI state(s).

29. The apparatus according to claim 21, wherein the fifth processing unit is specifically configured to:
indicate, through the MAC-CE used for activating the semi-persistent SRS, whether a receiving beam of the semi-persistent SRS uses a receiving beam indicated by the TCI state in the unified TCI architecture;
based on that the receiving beam indicated by the TCI state in the unified TCI architecture is used, use a receiving beam indicated by one TCI state among N TCI state(s) in the TCI state(s).

30. The apparatus according to claim 20, wherein the fourth processing subunit is specifically configured to:
based on that the CORESET is a first type of CORESET, determine to use a receiving beam indicated by the TCI state in the unified TCI architecture and indicate, through a media access control control element (MAC-CE) or a TCI state domain in a first downlink control information format, that one TCI state among N TCI state(s) is used for a beam transmission, wherein the first type of CORESET is a corresponding CORESET for a dedicated PDCCH;
based on that the CORESET is a second type of CORESET, configure, through high-level signaling, whether to use a receiving beam indicated by the TCI state in the unified TCI architecture; based on that the configured second type of CORESET uses the receive beam indicated by the TCI state in the unified TCI architecture, use one TCI state among N TCI state(s) in a TCI state indication in the unified TCI architecture for a beam transmission, or, indicate, through a media access control control element or a TCI state domain in a first downlink control information format, that one TCI state among N TCI state(s) is used for a beam transmission;
based on that the configured second type of CORESET does not use the receiving beam indicated by the TCI state in the unified TCI architecture, configure, through a predefined manner, a TCI state for a beam transmission; wherein the second type of CORESET is a CORESET using/not using the TCI state indication in unified TCI architecture;
for a multi-transmission receiving point (mTRP) of a PDCCH, configure any search space in two associated search spaces to use the TCI state indication in the unified TCI architecture for a beam transmission or not to use the TCI state indication in the unified TCI architecture for a beam transmission.

31. The apparatus according to claim 20, wherein the third processing subunit is specifically configured to:
configure, through the RRC, whether a receiving beam of the SRS uses a receiving beam indicated by the TCI state in the unified TCI architecture in a SRS resource or the SRS resource set;
based on that the receiving beam indicated by the TCI state in the unified TCI architecture is used, configure, through the RRC, or update, through MAC-CE, each SRS resource set to use one TCI state among indicated N TCI state(s) for a beam transmission; wherein all SRS resources in a same SRS resource set use a same TCI state;
based on that the receiving beam indicated by the TCI state in the unified TCI architecture is not used, configure, through each SRS resource in RRC, a TCI state thereof; wherein a power control parameter used by the SRS in a same SRS resource set uses a power control parameter associated with a TCI state of the SRS with the lowest index in the SRS resource set.

32. The apparatus according to claim 20, wherein the third processing subunit is specifically configured to:
based on an ID of the TCI state in the unified TCI architecture or configuring a configuration order of the SRS resource set, determine a first association relationship between the SRS resource set and the TCI state in the unified TCI architecture, wherein the first association relationship is, for the SRS resource set, an association relationship for using a receiving beam used by the TCI state in the unified TCI architecture; wherein a usage of the SRS is configured as a codebook/non-codebook SRS resource set; or,
determine, through a predefined manner, a second association relationship between the SRS resource set and the TCI state in the unified TCI architecture, wherein the second association relationship is, for the SRS resource set, an association relationship for using a receiving beam used by a control resource set in which DCI used for activating the SRS resource set is located.

33. A beam determining apparatus, applied in a terminal, comprising:
a receiving unit, configured to receive beam indication information sent by a base station; wherein the beam indication information is used to indicate the terminal to receive or send a target signal or a target channel in a corresponding time slot using a receiving beam of a reference signal indicated by a target transmission configuration indication state (TCI state);
a determining unit, configured to, based on the beam indication information, determine whether to use a receiving beam indicated by a TCI state in a unified TCI architecture.

34. The apparatus according to claim 33, wherein the target signal comprises: an aperiodic channel state information reference signal (Aperiodic CSI-RS), a semi-persistent channel state information reference signal (semi-persistent CSI-RS) or a sounding reference signal (SRS); and the target channel comprises: a non-dedicated physical downlink control channel (PDCCH) or a physical uplink shared channel (PUSCH); wherein the apparatus further comprises a processing unit, configured to:
before receiving the beam indication information sent by the base station, receive beams sent by the base station through scanning;
measure the beams to obtain beam measurement results;
compare the beam measurement results to determine a beam with best beam quality, and using index information of the beam with best beam quality as beam information;
wherein the beam indication information is determined by the base station based on the beam information.

35. A processor-readable storage medium, storing a computer program, wherein the computer program is configured to enable the processor to execute the method according to any one of claims 1 to 16.
